# EUROPEAN PATENT SPECIFICATION

(11) **EP 3 223 471 B1**
(45) Date of publication and mention of the grant of the patent: **29.04.2020**
(21) Application number: 16202323.8
(22) Date of filing: 03.09.2013
(51) Int. Cl.: H04L 12/701, H04L 29/08

(54) **DATA SOURCE MOVEMENT PROCESSING METHOD, PACKET FORWARDING METHOD, AND APPARATUS THEREOF**
DATENQUELLENBEWEGUNGSVERARBEITUNGSVERFAHREN, PAKETWEITERLEITUNGSVERFAHREN UND VORRICHTUNG DAFÜR
PROCÉDÉ DE TRAITEMENT DE MOUVEMENT DE SOURCE DE DONNÉES, PROCÉDÉ DE TRANSMISSION DE PAQUETS ET APPAREIL ASSOCIÉ

(30) Priority: 25.02.2013 CN 201310059104
(43) Date of publication of application: 27.09.2017
(62) Divisional of application: 13838062.1
(73) Proprietor: Huawei Technologies Co., Ltd., Longgang District Shenzhen, Guangdong 518129 (CN)
(72) Inventor: FAN, Lingyuan, Shenzhen, Guangdong (CN); YAO, Chunfeng, Shenzhen, Guangdong (CN); YAN, Zhefeng, Shenzhen, Guangdong (CN)
(74) Representative: Kreuz, Georg Maria

(56) References cited:
- WO-A1-2013/000165
- US-A1- 2013 029 664
- YANNICK NAUDET ET AL: "A mixed CCN-MAS architecture to handle context-awareness in hybrid networks", FUTURE NETWORK&MOBILE SUMMIT (FUTURENETW), 2011, IEEE, 15 June 2011 (2011-06-15), pages 1-8, XP032030954, ISBN: 978-1-4577-0928-9

## Description

### TECHNICAL FIELD

Embodiments of the present invention relate to the field of communications, and in particular, to a data source movement processing method, a packet forwarding method, and an apparatus thereof that are applied to an information centric network ICN.

### BACKGROUND

The Internet Protocol (Internet Protocol, "IP" for short) has achieved great success, and promoted the Internet to be ubiquitous, but early after the birth of IP, "terminals" are placed in the core position, and IP packets identified by destination IP addresses and source IP addresses bear a session between two terminals, so that IP is a terminal centric network protocol. However, nowadays the session between terminals is not the main purpose of using the Internet. Instead, people use the Internet mainly for obtaining information. For examples, applications such as network news, search engines, network music, network videos, blogs, microblogs, social networking sites, and network forums actually all focus on production, propagation, and sharing of information. Moreover, when obtaining the information, people usually do not care about where the information is obtained. This is a completely new information or content centric model. To solve the problem of mismatching between the information centric model of Internet applications and the terminal centric model of IP, the research circle is trying to redefine the waist of an Internet hourglass model and studying a new future Internet architecture directly oriented to information and content.

In all information centric network (Information Centric Network, "ICN" for short) architectures, a named data network (Named Data Network, "NDN" for short) has greater influence, and the NDN is studied and developed from content centric networking (Content Centric Networking, "CCN" for short) led by Van Jacobson. The NDN and the CCN consider that a future network shall, based on names and routes that are directly based on content, adopt structured content names similar to a URL, implement a caching function through a content store (Content Store, "CS" for short) in an NDN router, and search for a next hop by a longest match between a content name of requested content and a content name prefix of a forwarding information base (Forwarding Information Base, "FIB" for short). However, in a data source movement scenario, a content request packet shall be forwarded to a node where a data source, after being moved, is, and an NDN needs to perform route updates; an NDN routing table has a routing scalability problem, that is, the number of entries of a core routing table may be two hundred times that of Border Gateway Protocol (Border Gateway Protocol, "BGP" for short) routing entries in a current network; if each mobile terminal needs to have a routing entry thereof in the routing table, the number of routing entries in the routing table is huge, and it is difficult for existing hardware conditions to handle such large-scale processing of the routing table. Further, operations incurred by mobility, such as route updates, may cause more route fragments, which makes route aggregation more difficult, hence deteriorating the routing scalability problem.

For the problem that the NDN does not support data source movements well, a solution is provided, which is as follows: first, a content request packet is forwarded to a node where a data source, before being moved, is located, and the content request packet is reassembled at the node, and is then sent to a node where the data source, after being moved, is located. In the solution, a content name of content is not persistent, and the returned content cannot be used for subsequent matching of the content request packet, and therefore the advantage of sharing of a content network is lost; further, in the technical solution, the content name and location information are bound, and additional encryption work is required to ensure content security. Therefore, how to process a data source movement scenario without losing flexibility of content routing and security of content and without increasing the load of a routing table is an urgent problem to be solved by a current study of an NDN system and other ICN systems. Document: "A mixed CCN-MAS architecture to handle context-awareness in hybrid networks", Y Naudet, G Arnould, S Mignon, M Foulonneau, K Devooght, D Nicolas, 2011 Future Network & Mobile Summit, p. 1-8, discloses a hybrid network architecture for content delivery.

### SUMMARY

Embodiments of the present invention provide a data source movement processing method, a packet forwarding method, and an apparatus thereof, which are applied to an information centric network ICN, so as to support data source movement without introducing frequent and cumbersome route updates.

The present invention provides a packet forwarding method according to claim 1 and a router according to claim 8 so as to forward a content request packet.

### BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flow chart of a data source movement processing method according to an embodiment of the present invention;
FIG. 2 is another schematic flow chart of a data source movement processing method according to an embodiment of the present invention;
FIG. 3 is a schematic flow chart of a packet forwarding method according to an embodiment of the present invention;
FIG. 4 is another schematic flow chart of a packet forwarding method according to an embodiment of the present invention;
FIG. 5 is another schematic flow chart of a packet forwarding method according to an embodiment of the present invention;
FIG. 6 is another schematic flow chart of a packet forwarding method according to an embodiment of the present invention;
FIG. 7 is another schematic flow chart of a packet forwarding method according to an embodiment of the present invention;
FIG. 8 is another schematic flow chart of a packet forwarding method according to an embodiment of the present invention;
FIG. 9 is a schematic diagram of containers in a data source movement according to an embodiment of the present invention;
FIG. 10 is another schematic diagram of containers in a data source movement according to an embodiment of the present invention;
FIG. 11a is another schematic diagram of containers in a data source movement according to an embodiment of the present invention;
FIG. 11b is a schematic diagram of a container resolution tree in packet forwarding corresponding to FIG. 11a according to an embodiment of the present invention;
FIG. 12 is a schematic diagram of a network architecture according to an embodiment of the present invention;
FIG. 13 is a schematic block diagram of a container movement management apparatus according to an embodiment of the present invention;
FIG. 14 is another schematic block diagram of a container movement management apparatus according to an embodiment of the present invention;
FIG. 15 is a schematic block diagram of a router according to an embodiment of the present invention;
FIG. 16 is another schematic block diagram of a router according to an embodiment of the present invention;
FIG. 17 is another schematic block diagram of a router according to an embodiment of the present invention;
FIG. 18 is another schematic block diagram of a router according to an embodiment of the present invention;
FIG. 19 is another schematic block diagram of a router according to an embodiment of the present invention;
FIG. 20 is a schematic diagram of an information centric network ICN system according to an embodiment of the present invention;
FIG. 21 is a schematic block diagram of a container movement management apparatus according to another embodiment of the present invention;
FIG. 22 is a schematic block diagram of a router according to another embodiment of the present invention; and
FIG. 23 is a schematic diagram of an information centric network ICN according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

It should be understood that, the technical solutions in the embodiments of the present invention may be applied to various information centric network ICN architectures, such as a named data network (Named Data Network, "NDN" for short), a content centric network (Content Centric Networking, "CCN" for short), a network of information (Network of Information, "NetInf" for short), a data-oriented network architecture (Data-Oriented Network Architecture, "DONA" for short), and an expressive Internet architecture (eXpressive Internet Architecture, "XIA" for short).

It should also be understood that, in the embodiments of the present invention, a user equipment (User Equipment, "UE" for short) may be called a terminal (Terminal), a mobile station (Mobile Station, "MS" for short), a mobile terminal (Mobile Terminal), and so on. The user equipment may communicate with one or more core networks through a radio access network (Radio Access Network, "RAN" for short). For example, the user equipment may be a mobile phone (or called a "cell" phone), a computer having a mobile terminal, and so on. For example, user equipments may be mobile apparatuses that are portable, pocket-sized, handheld, built in computers, or mounted on vehicles, and they exchange voice and/or data with a radio access network.

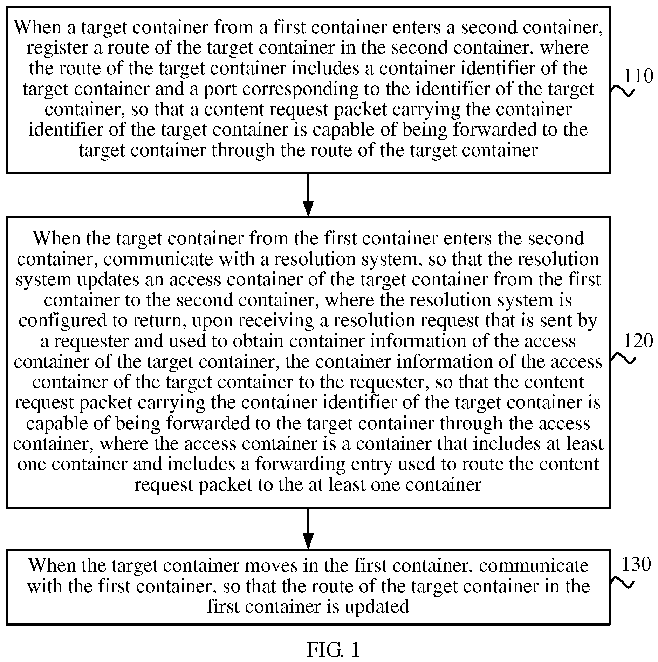

FIG. 1 is a schematic flow chart of a data source movement processing method 100 according to an embodiment of the present invention. The method 100 may be applied to an ICN network. The method of FIG. 1 may be executed by any suitable apparatus, and for example, may be executed by a target container that moves, may be executed by any network element in an access network that moves, may be executed by a border routing node, and may also be executed by an independent container movement management apparatus, but the embodiment of the present invention is not limited thereto. As shown in FIG. 1, the method 100 includes the following:
S110. When a target container from a first container enters a second container, register a route of the target container in the second container, where the route of the target container includes a container identifier of the target container and a port corresponding to the identifier of the target container, so that a content request packet carrying the container identifier of the target container is capable of being forwarded to the target container through the route of the target container.
S120. When the target container from the first container enters the second container, communicate with a resolution system, so that the resolution system updates an access container of the target container from the first container to the second container, where the resolution system is configured to return, upon receiving a resolution request that is sent by a requester and used to obtain container information of the access container of the target container, the container information of the access container of the target container to the requester, so that the content request packet carrying the container identifier of the target container is capable of being forwarded to the target container through the access container, where the access container is a container that includes at least one container and includes a forwarding entry used to route the content request packet to the at least one container.
S130. When the target container moves in the first container, communicate with the first container, so that the route of the target container in the first container is updated.

All of the target container, the first container, the second container, and the access container are storage spaces used to store content.

The resolution system is configured to provide a container resolution service. Specifically, the resolution system receives a resolution request sent by the requester. The resolution request is used to request container information of an access container of a resolvable container, and the requester may be a routing node, and may also be a user equipment. The resolution system determines the container information of the access container of the resolvable container according to a container identifier of the resolvable container, and returns the container information of the access container of the resolvable container to the requester. The container information includes a container identifier. Optionally, the container information may further include a resolvable flag, and the resolvable flag is used to identify whether the access container of the resolvable container is resolvable. The data source may be regarded as a data source container; the target container may be the data source container, and may also be an access container of the data source container, and the data source container moves along with the target container synchronously; the target container is a resolvable container, that is, a container, for which another container provides an access service and of which an access container may change, but the embodiment of the present invention is not limited thereto.

Therefore, in the data source movement processing method according to the embodiment of the present invention, the data source is abstracted as a container, and in the movement process of the target container, the route of the target container is updated and the information of the access container of the target container is updated in the resolution system. Therefore, the data source movement is supported without introducing frequent and cumbersome route updates and without changing a content name of content, thereby maintaining persistence of the content name, enhancing feasibility of an ICN architecture, and improving user experience.

In the embodiment of the present invention, a container is a storage space used to store a group of content, and the group of content may be one or more pieces of content. For example, a whole network of a country may be regarded as a national container, and the container is a storage space for all content located in the network of the country; similarly, a whole network of a province may be regarded as a provincial container, and the provincial container is a storage space for all content located in the network of the province. Further, a whole network of a company or an organization may also be regarded as a storage space for all content located in the network of the company or the organization; a network of a mobile apparatus, such as a plane, a train, or a ship, may be regarded as a storage space for all content of the network of the mobile apparatus, and a network of a mobile phone, a host, or other electronic apparatuses that store content may be regarded as a storage space for all content in the network, but the embodiment of the present invention is not limited thereto. Correspondingly, a container identifier of a container may be any content identifier prefix, for example, fanlingyuan.com/blog, may also be a company or an organization, for example, huawei.com and tsinghua.edu, may also be a mobile network, such as a plane, a train, and a ship, for example, airchina/ca1314, may also be a mobile phone, a host, or other electronic apparatuses that store content, for example, chinamobile/fanlingyuan, and may also be a network domain, such as cn, cn/gd, and cn/sd. One container may correspond to one container identifier, and may also correspond to two or more container identifiers, which is not limited by the embodiment of the present invention. However, for ease of description, examples in which containers and container identifiers always correspond to each other in a one-to-one manner are used in the following description, and a container identifier is used to represent a container.

Further, a container may logically include another container. For example, a provincial network is a part of a national network, so that it may be regarded that a national container logically includes a provincial container. An access container of a container logically includes the container and includes a container used to route a content request packet to the container. Specifically, when a container B includes a container A, and the container B includes a forwarding entry used to route a content request packet to the container A, it is defined that the container B is an access container of the container A, and the container B provides an access service for the container A. A container may provide an access service for one or more other containers, and one or more other containers may provide an access service for a same container. In other words, a container may be an access container of one or more other containers, and one or more other containers may be access containers of a same container.

In a network architecture, a container includes at least one routing node. One or more routing nodes among the at least one routing node are responsible for forwarding of a content request packet, and the container is called a home container of the at least one routing node. Through one or more routing nodes among at least one routing node included in an access container of the container, the content request packet can be routed to the container. For example, a national container "cn" topologically includes provincial containers "cn/gd" and "cn/sd", and through one or more routing nodes included in the national container "cn", a content request packet is capable of being routed to the provincial containers "cn/gd", "cn/sd", and so on, so that the national container "cn" provides an access service for the provincial containers "cn/gd", "cn/sd", and so on; containers "huawei.com/cn" and "huawei.com/us" topologically include a container "huawei.com", and through one or more routing nodes included in the containers "huawei.com/cn" and "huawei.com/us", a content request packet is capable of being routed to the container "huawei.com", so that the containers "huawei.com/cn" and "huawei.com/us" provide an access service for the container "huawei.com", but the embodiment of the present invention is not limited thereto.

Generally, a container includes at least one routing node, one or more routing nodes among the at least one routing node are responsible for forwarding of a content request packet, and through the one or more routing nodes, requested content is capable of being routed in the container, or requested content is capable of being routed through the container. A home container of content is a container where the content is capable of being directly routed.

In the embodiment of the present invention, in order to reduce routing entries in a routing table, all containers are classified into three types: topology-dependent containers, topology-independent large containers, and topology-independent small containers, and different routing policies are applied to the three different types of containers respectively.

First, a method of hierarchical nesting and level-by-level aggregation is applied to topology-dependent containers. A topology-dependent container is a container that forms a topological relationship with another container. The topological relationship includes the following: a higher-level container includes one or more lower-level containers, and/or a lower-level container is included by one or more higher-level containers. Specifically, all containers that form the topological relationship may be divided into different levels; each container is located at a specific level; when a difference between levels of two containers is one level, the container at the lower level is called a lower-level container of the container at the higher level, and the container at the higher level is called a higher-level container of the container at the lower level; the container at the lower level may be provided with an access service by the higher-level container thereof, that is, the container at the higher level is an access container of the lower-level container thereof. It should be understood that, the lower-level container and the higher-level container herein are relative, for example, a container A may be a lower-level container of a container B, and may also be a higher-level container of a container C, but the embodiment of the present invention is not limited thereto.

Optionally, a container identifier corresponding to a topology-dependent container may have a property capable of reflecting the level of the topology-dependent container, so as to indicate the topological relationship between the topology-dependent container and another container. Specifically, a container identifier of a container at a lower level may include a container identifier of a higher-level container thereof, for example, a container identifier "cn/gd/sz" of a municipal container Shenzhen includes a container identifier "cn/gd" of a higher-level container Guangdong thereof, but the embodiment of the present invention is not limited thereto.

A topology-dependent container at a highest level in the topological relationship acts as a global container. For example, for national containers "cn" and "us", routes thereof are capable of spreading as global routes. A global container is a container that is capable of being globally routed, and that the route thereof acts as a global route means that routing tables of all routing nodes have a routing entry of the global container. Optionally, according to needs of actual deployment, besides the topology-dependent container at the highest level in the topological relationship, some topology-dependent containers at high levels, such as provincial containers "cn/gd", "cn/sd", or "us/ca", may also act as topology-dependent global containers, and routes thereof are capable of spreading as global routes, but the embodiment of the present invention is not limited thereto. In the embodiment of the present invention, the topology-dependent container acting as a global container is called a topology-dependent global container.

Optionally, a lower-level container of the topology-dependent global container is provided with an access service by the topology-dependent global container, so that correspondingly, the route of the lower-level container is capable of acting as an internal route of a routing node included in the topology-dependent global container, and does not need to spread out of the topology-dependent global container. Specifically, the route of the lower-level container may be included only in a routing table of a routing node included in the topology-dependent global container. Generally, any topology-dependent container except the topology-dependent global container in the topological relationship provides an access service for lower-level containers thereof, and correspondingly, routes of the lower-level containers thereof are all capable of acting as internal routes of the topology-dependent container, and do not need to spread out of the topology-dependent container.

Optionally, topology-independent large containers are also capable of acting as global containers. The topology-independent large containers refer to a very small number of topology-independent containers each with a large number of visits in an existing network, for example, large ISPs, large companies, and large portal websites, such as "sina.com", "google.com", and "baidu.com", which have visits thousands or tens of thousands of times more than a common container, and are capable of acting as topology-independent global containers, and routes thereof are also capable of spreading as global routes.

A topology-independent small container refers to a topology-independent container with a small number of visits, and there are a lot of containers of this kind in the network, such as small companies, organizations, home networks, and personal digital apparatuses, which is also a main factor causing the routing scalability problem in existing ICN systems such as an NDN. In the embodiment of the present invention, for a container of this kind, a topology-dependent container may provide an access service, and correspondingly, a route of a container of this kind may be limited inside an access container of the container, and does not need to spread out of the access container of the container, so that the size of a core routing table is greatly reduced.

To sum up, in the embodiment of the present invention, the number of routing entries of a core routing table is basically equal to "the number of routes of topology-dependent global containers" plus "the number of routes of topology-independent global containers". The number of routes of both of the two kinds is small, so that the size of the entire routing table may be even less than the number of entries of a core routing table in a present Internet router. Therefore, in the embodiment of the present invention, container information of content is added in addition to a content name to extend a content attribute in an ICN system, a route of a topology-independent small container is limited in a topology-dependent container that provides an access service for the topology-independent small container, and a route of a lower-level container of a topology-dependent container is limited in the topology-dependent container, so that the number of entries of a core routing table is greatly reduced, thereby effectively solving the routing scalability problem in existing ICN systems such as an NDN.

In S110, the target container is a storage space used to store a group of content. Optionally, the group of content may be one or more pieces of content, but the embodiment of the present invention is not limited thereto. The first container is the access container of the target container, that is, the first container includes the target container and the first container includes a forwarding entry used to forward the content request packet carrying the container identifier of the target container to the target container. When the target container moves, the container movement management apparatus may determine whether the target container moves out of a current access container, that is, the first container. When the target container from the first container enters the second container, the route of the target container is registered in the second container, the routing entry of the target container may include a container identifier of the target container and a forwarding port corresponding to the container identifier, so that the second container provides an access service for the target container, and the content request packet carrying the container identifier of the target container is capable of being forwarded to the target container through the route of the target container in the second container. Optionally, the container movement management apparatus may communicate with the second container, so that the second container registers the route of the target container; optionally, the second container may actively monitor entering of the target container, and register the route of the target container in the routing table; optionally, the target container may also initiate a registration request to the second container, and the second container registers the route of the target container according to the registration request, but the embodiment of the present invention is not limited thereto. In the embodiment of the present invention, the route of the target container does not spread out of the access container of the target container, so that when the access container of the target container changes, that is, changes from the first container to the second container, only the routing table of the second container needs to be updated, so that route updates are rapid and convenient.

In S120, the container movement management apparatus may also communicate with the resolution system, so as to update the container information of the access container of the target container in the resolution system. Specifically, the container movement management apparatus may notify the resolution system of the change of the access container of the target container, and instruct the resolution system to update the container information of the access container of the target container, but the embodiment of the present invention is not limited thereto. When publishing content, a content publisher may determine that a target container, which stores the content, may move, and the content publisher may register with the resolution system that the target container is a resolvable container, and notify the resolution system of the current access container of the target container. When the access container of the target container changes, for example, changes from the first container to the second container, the change needs to be notified to the resolution system, so that the resolution system updates the access container of the target container; then other routing nodes or users may obtain the container information of the access container of the target container by querying the resolution system, and a content request packet is routed to the target container through the access container of the target container. Optionally, the target container may initiate an update request to the resolution system, or one or more routing nodes among the at least one routing node in the second container may also initiate an update request to the resolution system, so that the resolution system updates the container information of the access container of the target container from the container information of the first container to the container information of the second container according to the update request, but the embodiment of the present invention is not limited thereto.

It should be noted that, the embodiment of the present invention does not limit an execution sequence of steps S110 and S120, that is, the two steps of registering the route of the target container in the second container and updating the resolution system may be executed at the same time, or the route is registered first and then the resolution system is updated, or the resolution system is updated first and then the route is registered in the second container, but the embodiment of the present invention is not limited thereto.

In S130, the target container may actively send an update request to the first container to request the first container to update the route of the target container, and the first container updates the route of the target container according to the update request; optionally, the first container may detect the movement of the first container, and actively update the route of the target container according to needs, but the embodiment of the present invention is not limited thereto. In this case, the access container of the target container does not change, so that the resolution system does not need to be updated.

Optionally, in S110, registering the route of the target container in the second container after the target container from the first container enters the second container includes the following:
Sill. After the target container from the first container enters the second container, send registration request information to the second container, so that the second container registers the route of the target container in the second container according to the registration request information.

The target container that moves may store a group of content, and the group of content moves along with the target container; optionally, the target container may further be an access container of at least one other container, and in the movement process of the target container, the at least one other container also moves along with the target container. Optionally, the target container is an access container of at least one third container, and the at least one third container synchronously moves along with the target container, so that in the movement process, the access container of the at least one third container is always the target container.

Optionally, the second container includes at least one routing node; correspondingly, in S110, registering the route of the target container in the second container, so that the second container becomes the access container of the target container, includes the following:
S110a. Register the route of the target container in a routing table of one or more routing nodes among the at least one routing node included in the second container, so that the second container becomes the access container of the target container, and that the route of the target container does not spread out of the second container.

Specifically, the at least one routing node included in the second container is configured to forward the content request packet, and through one or more routing nodes among the at least one routing node, the requested content is capable of being directly routed in the second container, or the requested content is capable of being indirectly routed through the second container. Correspondingly, the registering the route of the target container in the second container may be implemented by adding a routing entry of the target container to a routing table of one or more routing nodes among the at least one routing node. Optionally, the routing entry of the target container may include a container identifier of the target container and a next-hop interface corresponding to the container identifier, where the next-hop interface refers to an interface of a next-hop routing node connecting the routing node to the target container, but the embodiment of the present invention is not limited thereto.

Optionally, in another embodiment, the first container includes at least one routing node; correspondingly, in S130, the communicating with the first container, so that the route of the target container in the first container is updated, includes the following:
S130a. Communicate with the first container, so that the route of the target container is updated in a routing table of one or more routing nodes among the at least one routing node included in the first container, and that the route of the target container does not spread out of the first container.

Specifically, the first container includes at least one routing node, and a routing table of one or more routing nodes among the at least one routing node includes a routing entry of the target container; when the target container moves, the routing entry of the target container may be updated in the routing table of the one or more routing nodes; optionally, according to actual needs, the routing entry of the target container may also be deleted from routing tables of some routing nodes among the one or more routing nodes, and the routing entry of the target container may also be added to some routing nodes among the at least one routing node, but the embodiment of the present invention is not limited thereto.

Optionally, the container information of the second container may include a container identifier of the second container, and may also include a resolvable flag of the second container. Optionally, in another embodiment, the method 100 further includes the following:
S140. When the target container from the first container enters the second container, register cacheability and an aging time of the second container in the resolution system, where the cacheability indicates that a mapping relationship between the target container and the second container is capable of being cached on a network side or a user equipment side, and the aging time indicates a valid time for which the mapping relationship is cached.

The cacheability of the second container is used to indicate that a mapping relationship, obtained by the resolution system by resolution, between the target container and the second container, which is the access container of the target container, is capable of being cached on the network side or the user equipment side, and the aging time indicates the valid time for which the resolution result is capable of being cached. For example, a routing node queries the resolution system for the access container of the target container, a resolution result returned by the resolution system is that the access container of the target container is the second container, and routing nodes along a path, through which the resolution system returns the resolution result to the routing node that queries, may all cache the resolution result, thereby facilitating sharing with other routing nodes. When another routing node queries for the access container of the target container, and a query request is forwarded to a node storing the resolution result, the node storing the resolution result may directly return the resolution result without querying the resolution system again. In order to immediately update the access container of the target container, when a time, for which the resolution result is cached, exceeds the aging time, the resolution result cached on the routing node becomes invalid, and the resolution system needs to be queried again to obtain the access container of the target container.

Specifically, a cacheable access container may be indicated by "cachable = yes" and "TTL = T", where T represents the valid time for which the resolution result is cached, for example, "TTL=1 hour" indicates that the caching time of the resolution result is 1 hour. The aging time T needs to be determined according to a movement property of the container, and for a container with a fixed mapping relationship, a large value of the TTL may be set, for example, 5000 s, so that the resolution result may be stored for a longer time on the network side or in a user equipment, so as to decrease a frequency of accessing the resolution system; but for a container with frequent movements causing the access container to change frequently, a small TTL value may be set to ensure that registered information is updated and maintained rapidly. For example, access containers of a terminal container "chinamobile/fanlingyuan" are a municipal container "cn/gd/sz" and a topology-independent container "hostsrv.com", and the container "chinamobile/fanlingyuan" moves frequently, for example, rushes between Shenzhen, Guangzhou, and Shantou, so that the municipal container that provides the terminal container with an access service may change frequently, but the topology-independent container "hostsrv.com" that provides the terminal container with an access service may basically remain unchanged. Therefore in the resolution system, the TTL value of the container "cn/gd/sz" may be set to 1 h, and the TTL value of the container "hostsrv.com" may be set to 50 h, but the embodiment of the present invention is not limited thereto.

Optionally, when the target container has multiple access containers, the multiple access containers thereof may be prioritized in the resolution system, and the access containers among the multiple access containers thereof may be resolvable containers, but the embodiment of the present invention is not limited thereto.

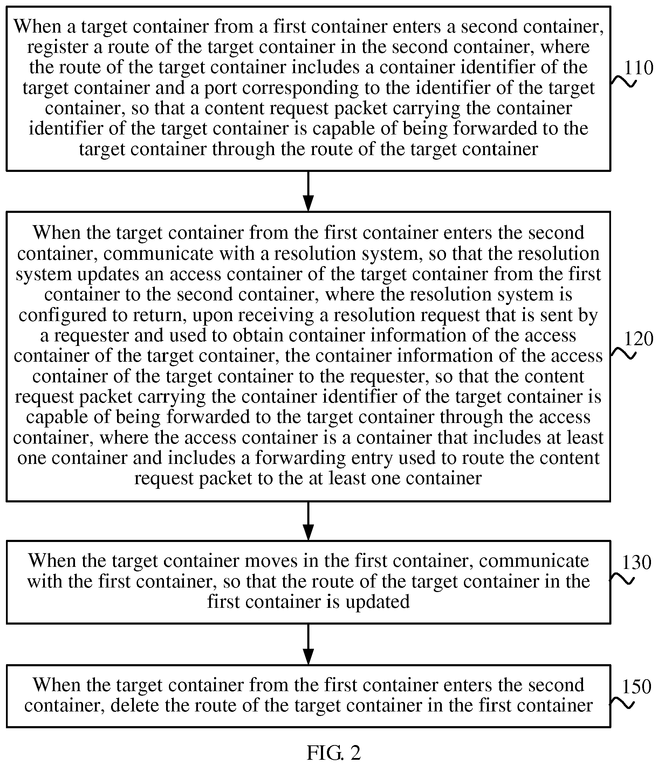

Optionally, in another embodiment, as shown in FIG. 2, the method 100 further includes the following:
S150. When the target container from the first container enters the second container, delete the route of the target container in the first container.

The target container may send request information to the first container to request the first container to delete the route of the target container, and the first container cancels the route of the target container according to the request; optionally, the first container may also automatically detect whether the target container is still in the first container, and when it is detected that the target container moves out of the first container, actively delete the route of the target container, but the embodiment of the present invention is not limited thereto.

Specifically, the first container may include at least one routing node, a routing table of one or more routing nodes among the at least one routing node includes the routing entry of the target container, and the deleting the route of the target container is specifically deleting the routing entry of the target container from the routing table of the one or more routing nodes, but the embodiment of the present invention is not limited thereto.

Optionally, in another embodiment, in S150, the deleting the route of the target container in the first container includes the following:
S151. Send route deletion instruction information to the first container, so that the first container deletes the route of the target container according to the route deletion instruction information.

Therefore, in the data source movement processing method according to the embodiment of the present invention, the data source is abstracted as a container, and in the movement process of the target container, the route of the target container is updated and the information of the access container of the target container is updated in the resolution system. Therefore, the data source movement is supported without introducing frequent and cumbersome route updates and without changing a content name of content, thereby maintaining persistence of the content name, enhancing feasibility of an ICN architecture, and improving user experience.

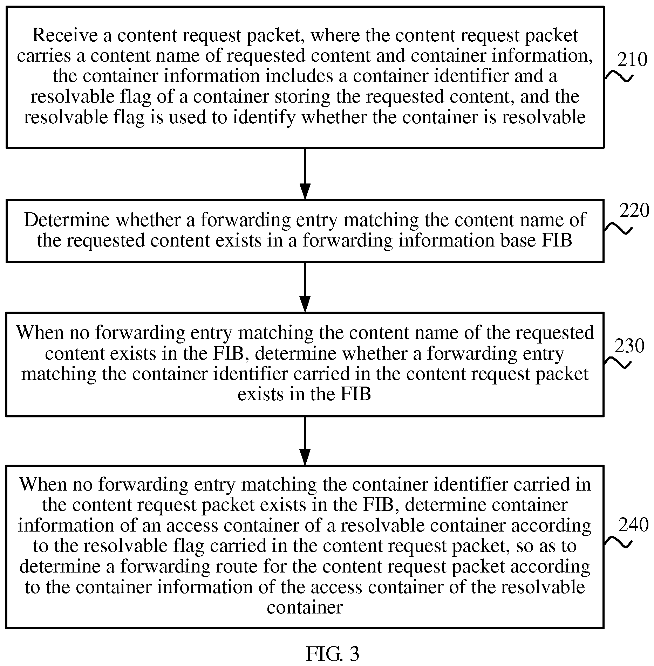

FIG. 3 is a schematic flow chart of a packet forwarding method 200 according to an embodiment of the present invention. The method may be executed by a routing node, and for ease of description, a routing node that executes the method 200 is called this node below. It should be understood that, the packet forwarding method in this embodiment may be executed on the basis of the foregoing embodiments, that is, when a content request packet received by this node carries a container identifier of a resolvable container, this node may determine a forwarding entry for the content request packet by querying a resolution system; for example, the content request packet carries a container identifier of a target container, and after the second container registers a route of the target container and an access container corresponding to the target container is updated in the resolution system, this node may obtain container information of the second container through the resolution system, and forward the content request packet to the target container through the second container. As shown in FIG. 3, the method 200 includes the following:
S210. Receive a content request packet, where the content request packet carries a content name of requested content and container information, the container information includes a container identifier and a resolvable flag of a container storing the requested content, and the resolvable flag is used to identify whether the container is resolvable.
S220. Determine whether a forwarding entry matching the content name of the requested content exists in a forwarding information base FIB.
S230. When no forwarding entry matching the content name of the requested content exists in the FIB, determine whether a forwarding entry matching the container identifier carried in the content request packet exists in the FIB.
S240. When no forwarding entry matching the container identifier carried in the content request packet exists in the FIB, determine container information of an access container of a resolvable container according to the resolvable flag carried in the content request packet, so as to determine a forwarding route for the content request packet according to the container information of the access container of the resolvable container.

Upon receiving the content request packet, this node sequentially searches for the forwarding entry matching the content name of the requested content and the forwarding entry matching the container identifier in the container information carried in the content request packet in the FIB, and when no matched forwarding entry is found by the search, this node may determine, according to the resolvable flag carried in the content request packet, a resolvable container in the container corresponding to the container information carried in the content request packet, where the container corresponding to the container information carried in the content request packet may include one or more resolvable containers; then, this node resolves the one or more resolvable containers to obtain container information of the access container of the one or more resolvable containers, where the container information of the access container may include a container identifier of the access container, and may also further include a resolvable flag of the access container, and continues to search for a forwarding entry matching the container identifier of the access container of the resolvable container in the FIB.

Therefore, in the packet forwarding method according to the embodiment of the present invention, container information of content is added in addition to a content name to extend an attribute of the content in an ICN architecture, and a forwarding route may be determined for a content request packet according to a container identifier and a resolvable flag carried in the content request packet, so that in a movement process of a data source, the content request packet may be sent to the moving data source without frequent involvement of a resolution system, thereby improving user experience.

In S210, the content request packet received by this node may be sent by another routing node, and may also be sent by a user equipment, which is not limited by the embodiment of the present invention. The container corresponding to the container identifier included in the container information of the requested content carried in the content request packet forms a container set of the requested content, and the container set may include one or more containers. Optionally, one or more containers in the container set are access containers of one or more first other containers; and/or, one or more second other containers are access containers of the container, where the access container is a container that includes at least one container and includes a forwarding entry used to route a content request packet to the at least one container, and "the first other container" and "the second other container" herein may be other containers than the container, may be containers belonging to the container set, and may also be other containers not belonging to the container set, but the embodiment of the present invention is not limited thereto.

Specifically, the container set may include a home container of the requested content. The home container of the requested content is a container where the requested content is capable of being directly routed. The home container of the requested content includes a forwarding entry corresponding to the content name of the requested content, that is, an FIB of one or more routing nodes among at least one routing node included in the home container of the requested content includes the forwarding entry corresponding to the content name of the requested content, and the content name of the requested content corresponds to the home container of the requested content. The requested content may have one or more home containers, and correspondingly, the content name of the requested content may correspond to one or more home containers, and the requested content is capable of being routed in the home container corresponding to the content name of the requested content.

The access container of the home container of the requested content may be regarded as a container storing the requested content, where the requested content is capable of being indirectly routed through the access container of the home container. Optionally, the container set may further include the access container of the home container of the requested content, or further include an access container of the access container, and through the access container of the home container or through one or more routing nodes included in the access container of the access container, the requested content is capable of being routed through the access container. Optionally, the container set may also include all containers storing the content, but the embodiment of the present invention is not limited thereto.

It should be understood that, in the embodiment of the present invention, the home container where the requested content is capable of being directly routed and the container where the requested content is capable of being indirectly routed, such as the access container of the home container and the access container of the access container, may both be regarded as containers storing the requested content; however, only a container directly including a routing node is a home container of the routing node, but an access container of the container is not a home container of the routing node.

Further, the container information of the requested content may carry a container identifier and a resolvable flag of each container in the container set, and the resolvable flag is used to identify whether the container corresponding to the container identifier is resolvable, where a resolvable container is a container of which an access container may be obtained by querying the resolution system. Specifically, the content request packet may carry a resolvable flag of a resolvable container, and a container without a resolvable flag is irresolvable by default. Optionally, the content request packet may also carry resolvable flags of all containers, and different resolvable flags are used to indicate whether a container is resolvable or irresolvable; for example, the resolvable flag "resolvable=yes" indicates that the container is resolvable, but "resolvable=no" indicates that the container is irresolvable, but the embodiment of the present invention is not limited thereto.

Optionally, a relationship between the content name of the requested content and the container set of the requested content may be indicated by a tree. Correspondingly, a relationship between the content name of the requested content and the container information of the requested content may also be indicated by a tree structure. Specifically, a content name of requested content and container information of the requested content form a tree with the content name of the requested content being a root node, a child node of the root node represents container information of a home container of the requested content, a container corresponding to container information represented by a first node is an access container of a container corresponding to container information represented by a parent node of the first node, and the first node is a node in the tree other than the root node and the child node of the root node.

The tree-based representation method is simple and clear, but when two or more containers have a same access container, the tree-based representation method has duplicate nodes. When a large number of such duplicate nodes exist, the tree-based representation method has the problem of low efficiency. Optionally, in order to avoid duplicate nodes, the relationship between the content name of the requested content and the container set of the requested content may also be indicated by a directed acyclic graph. Correspondingly, the content name of the requested content and the container information of the requested content may also be indicated by a directed acyclic graph. Specifically, a content name of requested content and container information of the requested content form a directed acyclic graph with the content name of the requested content being an entrance vertex, an endpoint of a directed edge originated from the entrance vertex represents container information of a home container of the requested content, a container corresponding to container information represented by a second vertex in the directed acyclic graph is an access container of a container corresponding to container information represented by a first vertex, the first vertex is a vertex in the directed acyclic graph other than the entrance vertex, and the second vertex is an endpoint of a directed edge originated from the first vertex. However, the embodiment of the present invention is not limited to a specific representation method.

Optionally, the container in the container set is a storage space used to store a group of content. Optionally, the container includes at least one routing node, and through one or more routing nodes among the at least one routing node, the requested content is capable of being routed in the container, or the requested content is capable of being routed through the container. The content name of the requested content corresponds to one or more home containers, and the home container of the requested content is a container where the requested content is capable of being directly routed. Optionally, the container is an access container of one or more first other containers; and/or
one or more second other containers are access containers of the container, where the access container is a container that includes at least one container and includes a forwarding entry used to route the content request packet to the at least one container.

Optionally, a forwarding entry in the FIB includes a content name prefix and an interface corresponding to the content name prefix.

Correspondingly, in S220, the determining whether a forwarding entry matching the content name of the requested content exists in a forwarding information base FIB includes the following:
S221. According to whether a prefix of the content name of the requested content matches a content name prefix in a forwarding entry in the FIB, determine whether a forwarding entry matching the content name of the requested content exists in the FIB.

This node performs searching and matching on the prefix of the content name of the requested content and a content name prefix in a forwarding entry, to determine whether a forwarding entry matching the content name of the requested content exists in the FIB.

Optionally, in another embodiment, a forwarding entry in the FIB includes a preset container identifier and an interface corresponding to the preset container identifier.

Correspondingly, in S230, the determining whether a forwarding entry matching the container identifier carried in the content request packet exists in the FIB includes the following:
S231. Match the container identifier carried in the content request packet with a preset container identifier in the FIB, to determine whether a forwarding entry matching the container identifier carried in the content request packet exists in the FIB.

A forwarding entry in the FIB of this node includes a content name prefix and an interface corresponding to the content name prefix, or includes a preset container identifier and an interface corresponding to the preset container identifier.

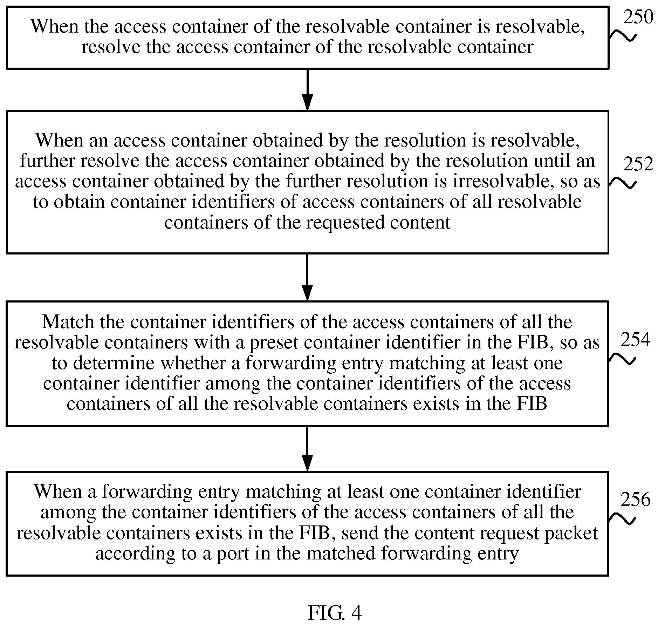

Optionally, this node may, when the access container of the resolvable container is still resolvable, resolve the access container of the resolvable container. Optionally, in another embodiment, as shown in FIG. 4, the method 200 further includes the following:
S250. When the access container of the resolvable container is resolvable, resolve the access container of the resolvable container.
S252. When an access container obtained by the resolution is resolvable, further resolve the access container obtained by the resolution until an access container obtained by the further resolution is irresolvable, so as to obtain container identifiers of access containers of all resolvable containers of the requested content.
S254. Match the container identifiers of the access containers of all the resolvable containers with a preset container identifier in the FIB, so as to determine whether a forwarding entry matching at least one container identifier among the container identifiers of the access containers of all the resolvable containers exists in the FIB.
S256. When a forwarding entry matching at least one container identifier among the container identifiers of the access containers of all the resolvable containers exists in the FIB, send the content request packet according to a port in the matched forwarding entry.
S252 may be executed cyclically. Specifically, when determining that the access container of the resolvable container is still resolvable, this node further queries the resolution system to obtain an access container of the access container, and determines whether the access container of the access container is resolvable; when the access container of the access container is still resolvable, this node further resolves the access container of the access container, so that an iterative resolution process is performed in this way until an access container obtained by the further resolution is irresolvable. Up to now, the complete resolution process has ended, and this node has obtained the access containers of all the resolvable containers of the requested content. Then, this node sequentially matches the container identifiers of all the access containers obtained in the complete resolution process with a preset container identifier in the FIB according to a priority policy, to determine whether a forwarding entry matching the container identifier of an access container among all the access containers exists in the FIB; and when a matched forwarding entry exists in the FIB, this node may send the content request packet to an interface in the matched forwarding entry. Optionally, this node may also perform the foregoing cyclic resolution process only on access containers of some resolvable containers obtained in S240, or after executing a further resolution process several times, this node first matches container identifiers of access containers obtained by the further resolution with a preset container identifier in the FIB sequentially, and when no forwarding entry matching any container identifier exists in the FIB, continues to further resolve and match a resolvable container, but the embodiment of the present invention is not limited thereto.

Optionally, in another embodiment, the method 200 further includes the following:
S258. When no forwarding entry matching any container identifier among the container identifiers of the access containers of all the resolvable containers exists in the FIB, send the content request packet according to a default interface or discard the content request packet.

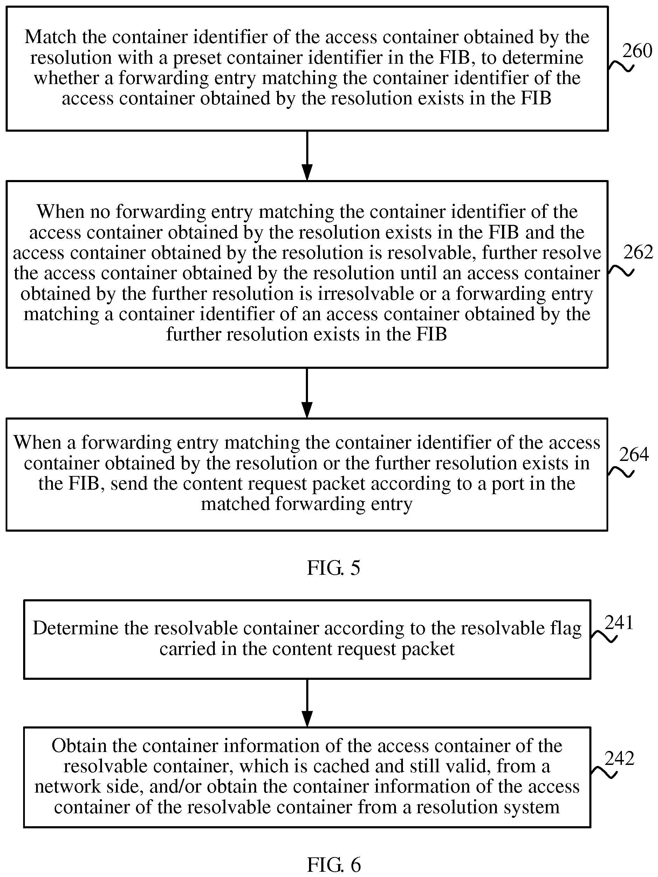

Optionally, this node may also match the container identifier of the access container of the resolvable container obtained in S240 with a preset container identifier in a forwarding entry in the FIB, and when no forwarding entry matching the container identifier of the access container of the resolvable container exists in the FIB, and the access container of the resolvable container is still resolvable, further resolve and match the access container of the resolvable container. Compared with the foregoing complete resolution process, the processing process of alternate resolving and matching can decrease the number of times of resolving the resolvable container, thereby accelerating processing progress of the content request packet. Optionally, in another embodiment, as shown in FIG. 5, the method 200 further includes the following:
S260. Match the container identifier of the access container obtained by the resolution with a preset container identifier in the FIB, to determine whether a forwarding entry matching the container identifier of the access container obtained by the resolution exists in the FIB.
S262. When no forwarding entry matching the container identifier of the access container obtained by the resolution exists in the FIB and the access container obtained by the resolution is resolvable, further resolve the access container obtained by the resolution until an access container obtained by the further resolution is irresolvable or a forwarding entry matching a container identifier of an access container obtained by the further resolution exists in the FIB.
S264. When a forwarding entry matching the container identifier of the access container obtained by the resolution or the further resolution exists in the FIB, send the content request packet according to a port in the matched forwarding entry.
S262 may be executed cyclically. Specifically, when determining that no forwarding entry matching the container identifier of the access container obtained by the resolution exists in the FIB and the access container obtained by the resolution is resolvable, this node further resolves the access container obtained by the resolution, and matches the container identifier of the access container obtained by the further resolution with a preset container identifier in the FIB, to determine whether a forwarding entry matching the container identifier of the access container obtained by the further resolution exists in the FIB; when no forwarding entry matching the container identifier of the access container obtained by the further resolution exists in the FIB and the access container obtained by the further resolution is still resolvable, further resolves the access container obtained by the further resolution, and matches the container identifier of the access container obtained by the further resolution with a preset container identifier in the FIB. The process is executed cyclically until the access container obtained by the further resolution is irresolvable or a forwarding entry matching the container identifier of the access container obtained by the further resolution exists in the FIB. Optionally, this node may also first resolve and match some access containers obtained by the resolution or further resolution, and when the matching is not successful, then further resolve and match remaining access containers; optionally, this node may also first perform further resolution for several times and then perform matching, but the embodiment of the present invention is not limited thereto.

Optionally, in another embodiment, the method 200 further includes the following:
S266. When no forwarding entry matching the container identifier of the access container obtained by the further resolution exists in the FIB and the access container obtained by the further resolution is irresolvable, send the content request packet according to a default interface or discard the content request packet.

Optionally, in another embodiment, as shown in FIG. 6, in S240, the determining the container information of the access container of the resolvable container according to the resolvable flag carried in the content request packet includes the following:
S241. Determine the resolvable container according to the resolvable flag carried in the content request packet.
S242. Obtain the container information of the access container of the resolvable container, which is cached and still valid, from a network side, and/or obtain the container information of the access container of the resolvable container from a resolution system.

In the content request packet, when container information of only some containers includes a resolvable flag, this node determines that, among one or more containers corresponding to the container information, a container including a resolvable flag is a resolvable container; optionally, when this node presets that, in the content request packet, only container information of an irresolvable container includes a resolvable flag, this node determines that a container not including a resolvable flag is a resolvable container; optionally, when container information of each container in the content request packet includes a resolvable flag, this node determines a resolvable container according to a specific resolvable flag, for example, determines, according to a resolvable flag "resolvable=yes", that a container corresponding to the resolvable flag is a resolvable container, but the embodiment of the present invention is not limited thereto.

Optionally, at least one other routing node of the network side may be on the path through which this node queries the resolution system for the access container of the resolvable container, and when one or more routing nodes among the at least one other routing node store the resolution result of the resolvable container, and the resolution result is still valid, the one or more routing nodes directly return the resolution result, and it is unnecessary to query the resolution system again; optionally, when no routing node among the at least one other routing node stores the resolution result of the resolvable container or the stored resolution result is invalid, the query request is forwarded to the resolution system, and the resolution system returns the resolution result of the resolvable container, but the embodiment of the present invention is not limited thereto.

Optionally, in another embodiment, the container information of the access container of the resolvable container includes cacheability and an aging time, the cacheability indicates that a mapping relationship between the resolvable container and the access container of the resolvable container is capable of being cached on the network side or the user equipment side, and the aging time indicates a valid time for which the mapping relationship is cached; correspondingly, the method 200 includes the following:
S268. Cache the mapping relationship between the resolvable container and the access container of the resolvable container on the network side, so as to facilitate sharing with other routing nodes or user equipments.

Optionally, a resolution result returned by other routing nodes on the network side or the resolution system may include the container identifier of the access container of the resolvable container, may also further include the resolvable flag of the access container of the resolvable container, and optionally, may also further include cacheability and an aging time to indicate that the user equipment or the network side may cache the resolution result and indicate a valid time for which the resolution result is cached, so as to facilitate sharing with other user equipments and routing nodes. The network side herein may include this node, and may also include at least one other routing node on a path through which the resolution result is returned to this node, but the embodiment of the present invention is not limited thereto.

Optionally, in another embodiment, the method 200 further includes the following:
S270a. When a forwarding entry matching the content name of the requested content exists in the FIB, send the content request packet according to an interface in the matched forwarding entry; or
S270b. When a forwarding entry matching the container identifier carried in the content request packet exists in the FIB, send the content request packet according to a port in the matched forwarding entry.

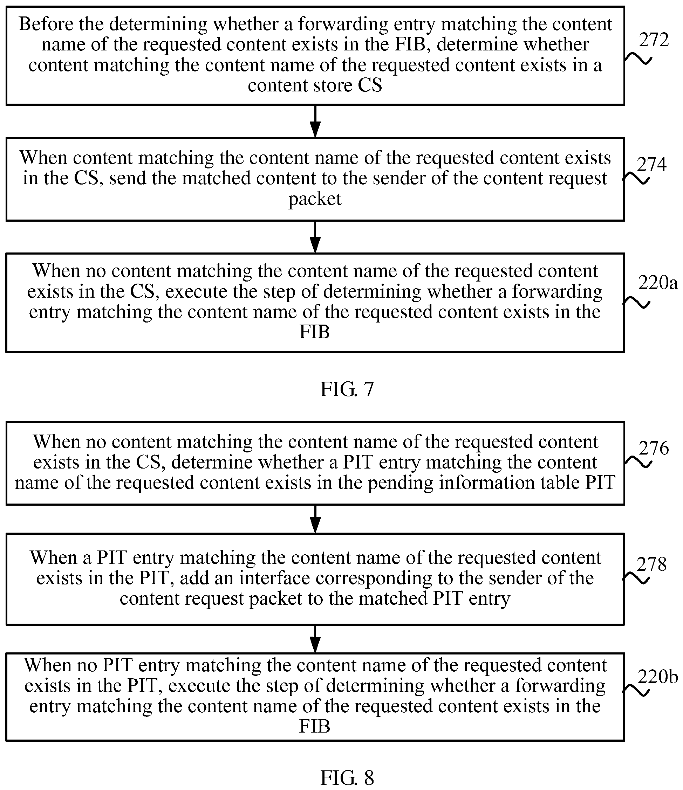

Optionally, this node may also cache the requested content through a CS, so that when receiving a request for the same content, the routing node may directly send the requested content stored in the CS to a sender of the content request packet, thereby making the content requesting process simpler and faster. Optionally, in another embodiment, as shown in FIG. 7, the method 200 further includes the following:
S272. Before the determining whether a forwarding entry matching the content name of the requested content exists in the FIB, determine whether content matching the content name of the requested content exists in a content store CS.
S274. When content matching the content name of the requested content exists in the CS, send the matched content to the sender of the content request packet.
S220a. When no content matching the content name of the requested content exists in the CS, execute the step of determining whether a forwarding entry matching the content name of the requested content exists in the FIB.

Optionally, this node may also be compatible with a routing and forwarding method in an NDN in the prior art, route information of the sender of the content request packet is stored in a pending information table (Pending Information Table, "PIT" for short), and when the requested content is not returned, searching, matching and forwarding are performed only once for a same content request; when returning the requested content, this node may also determine a next-hop interface of a data packet including the requested content through a PIT entry in the PIT, so as to not only avoid repeated searching for the same requested content, but also determine a next-hop interface for the returned data packet. Optionally, in another embodiment, as shown in FIG. 8, the method 200 further includes the following:
S276. When no content matching the content name of the requested content exists in the CS, determine whether a PIT entry matching the content name of the requested content exists in the pending information table PIT.
S278. When a PIT entry matching the content name of the requested content exists in the PIT, add an interface corresponding to the sender of the content request packet to the matched PIT entry.
S220b. When no PIT entry matching the content name of the requested content exists in the PIT, execute the step of determining whether a forwarding entry matching the content name of the requested content exists in the FIB.

In the embodiment of the present invention, the forwarding entry of the resolvable container may spread only in the access container of the resolvable container, so that the number of routing entries of a routing table in a core router is reduced; when the resolvable container moves in the access container, only the routing table in the access container may be updated; when the resolvable container moves out of the current access container and enters another container, a routing table of the current access container and a routing table in the other container may be updated, so that the other container becomes a new access container of the resolvable container, and information of the access container of the resolvable container is updated in the resolution system, so that a content request packet or a data packet may be routed to the resolvable container through the new access container. Optionally, a forwarding entry of the resolvable container is only included in the access container of the resolvable container, so that a route of the resolvable container does not spread out of the access container of the resolvable container.

Optionally, in another embodiment, the access container of the resolvable container includes at least one routing node; correspondingly, a forwarding entry of the resolvable container is only included in the access container of the resolvable container, so that a route of the resolvable container does not spread out of the access container of the resolvable container, which includes the following:
The forwarding entry of the resolvable container is only included in a routing table of one or more routing nodes among at least one routing node included in the access container of the resolvable container, so that the route of the resolvable container does not spread out of the at least one routing node included in the access container of the resolvable container.

Therefore, in the packet forwarding method according to the embodiment of the present invention, container information of content is added in addition to a content name to extend an attribute of the content in an ICN architecture, and a forwarding route may be determined for a content request packet according to a container identifier and a resolvable flag carried in the content request packet, so that in a movement process of a data source, the content request packet may be sent to the moving data source without frequent involvement of a resolution system, thereby improving user experience.

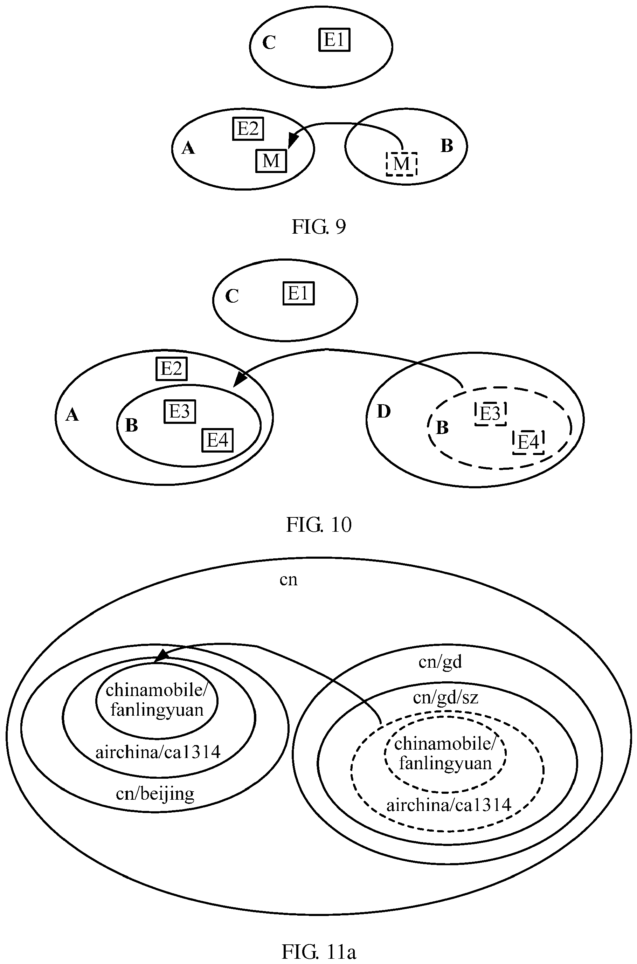

The data source movement processing method provided by the embodiment of the present invention and the packet forwarding method corresponding to the data source movement processing method are hereinafter described in more detail with reference to a specific example. FIG. 9 is a schematic diagram of containers in a data source movement according to an embodiment of the present invention. As shown in FIG. 9, for a terminal M acting as a data source, a network thereof may be regarded as a target container M, and when the target container M moves from an original access container B into a container A, the container A registers route information of the target container M, and therefore becomes a new access container of the target container M. When another terminal E1 with a container C being an access container requests content stored in the target container M, a content request packet is sent to a routing node of a network side, where the content request packet carries a content name of the requested content and container information of the target container M; because a routing node in the container C is different from the access container of the target container M, and no forwarding entry corresponding to the content name of the requested content and a container identifier of the target container M exists in an FIB of the routing node in the container C, it is necessary to query a resolution system to know that the access container of the target container M is A; then the content request packet is forwarded to the container A; after the content request packet is forwarded to a routing node in the container A, because the routing node included in A and the target container M are in the same access container, a forwarding entry corresponding to the content name of the requested content and/or the container identifier of the target container M may exist in the FIB of the routing node, a forwarding route may be determined for the content request packet according to the forwarding entry, and the content request packet may finally be forwarded to the target container M. When another terminal E2 with the container A being an access container requests content stored in the target container M, because an access container of the terminal E2 is the same as the access container of the target container M, the routing node may search the FIB according to the content name or the container identifier of the target container M, and forward a content request packet to the target container M without querying the resolution system.

FIG. 10 is another schematic diagram of containers in a data source movement according to an embodiment of the present invention. As shown in FIG. 10, a target container B moves from an original access container D to a container A, and a terminal container E3 and a terminal container E4 included in the target container B move along with the target container B, which may be called a network movement. The container A may register route information of the target container B, so as to become a new access container of the target container B. Similar to that in the description of FIG. 8, when a terminal outside the target container B requests content stored in the terminal container E4, a content request packet may be forwarded to the target container B first, and then the content request packet is forwarded to the terminal container E4 by using an internal route of the target container B; when a terminal in the target container B requests the content stored in the terminal container E4, the content request packet may be forwarded to the terminal container E4 by using the internal route of the target container B. Optionally, when a terminal in the target container B requests content stored in the terminal container E4, a content request packet may only carry a content name of the requested content, or may only carry a content name of the requested content and a container identifier of the terminal container E4 but does not carry a resolvable flag of the terminal container E4, but the embodiment of the present invention is not limited thereto.

It can be seen from the examples of FIG. 9 and FIG. 10 that, the target container that moves may be a container carrying a content set, and may also be a container carrying a container set. When a target container carrying a container set moves in an access container of the target container, a route of the target container in the access container of the target container may be updated. When a target container carrying a container set moves to a new access container, the target container may register a route of the target container with the new access container, and the route of the target container does not need to spread out of the new access container, and the target container may update information of the access container of the target container in the resolution system; an access container of the container set carried by the target container does not change, so it is unnecessary to update a route of the container set carried by the target container or update the information of the access container thereof in the resolution system.

FIG. 11a is another schematic diagram of containers in a data source movement according to an embodiment of the present invention. A terminal user moves from Shenzhen to Guangzhou and Beijing in succession by a vehicle such as a plane or a train, that is, a vehicle container moves from a municipal container to another municipal container. In the movement process, a set formed by a large number of terminal containers included in the vehicle container moves along with the vehicle container.

Specifically, as shown in FIG. 11a, when a terminal enters a plane, a terminal container registers route information thereof with a plane container, and meanwhile registers the following container information of an access container of the terminal container with a resolution system: chinamobile/fanlingyuan -> {airchina/ca1314; resolvable = yes; TTL=1000}, where the registered information indicates that a container that currently provides a container "chinamobile/Fanlingyuan" with an access service is a plane container "airchina/ca1314", and that the plane container "airchina/ca1314" is capable of being further resolved. Meanwhile, the plane container "airchina/ca1314" also registers a route in an access container thereof, and registers the following container information of the access container of the plane container "airchina/ca1314" with the resolution system: airchina/ca1314 -> {cn/gd/sz; TTL=1000}, where the registered information indicates that the access container of the container "airchina/ca1314" is a municipal container "cn/gd/sz". In this way, during flying of the plane, the plane container "airchina/ca1314" only needs to update, in the resolution system, the container that provides the plane container "airchina/ca1314" with an access service, and register route information thereof in a new access container thereof. For example, when the plane arrives in Guangdong, the container "airchina/ca1314" updates, in the resolution system, container information of the access container thereof to "cn/gd/gz"; when the plane arrives in Beijing, the container "airchina/ca1314" updates, in the resolution system, the container information of the access container thereof to "cn/beijing". During the movement of the plane, a position of a terminal user in the plane does not change relative to the plane, so that no terminal container in the plane container needs to interact with the resolution system, thereby preventing the resolution system from being intensively and frequently updated. When the plane reaches the destination, which is Beijing, a terminal may leave the plane and enter another container "cn/beijing". At the moment, a terminal container may register route information of the terminal container with the container "cn/beijing", so that the container "cn/beijing" becomes a new access container of the terminal container, and meanwhile, the terminal container may update, in the resolution system, container information of the access container of the terminal container.

Correspondingly, when a terminal 1 enters the plane container "airchina/ca1314", if a terminal 2 in the same plane container requests content stored in the terminal 1, a content request packet is sent to a network side, which is {fanlingyuan.com/blog/2012/June01/main.htmllchinamobile/Fanlingyuan; resolvable=yes}, and the content request packet may be routed to the terminal 1 through a routing node in the container "airchina/ca1314".

Optionally, when the terminal 2 is outside the container "airchina/ca1314", because a forwarding entry corresponding to the content name and container identifier carried in the content request packet only spreads in the plane container "airchina/ca1314", a routing node outside the plane cannot find a forwarding entry matching the content name "fanlingyuan.com/blog/2012/June01/main.html" or the container identifier "chinamobile/fanlingyuan" in an FIB. In this case, because the container "chinamobile/fanlingyuan" is resolvable, a routing node on the network side may perform first-level resolution on the container "chinamobile/fanlingyuan" to obtain an access container set of the container "chinamobile/fanlingyuan": the container "airchina/ca1314" and a container "hostsrv.com". If a forwarding entry matching the two container identifiers obtained by the resolution exists in the FIB, the content request packet may be forwarded according to an interface in the matched forwarding entry; optionally, if still no route matches the two container identifiers and the two containers are still resolvable, the routing node on the network side may perform second-level resolution to obtain the access container "cn/beijing" of the container "airchina/ca1314" and access containers "cn/gd", "cn/beijing", and "us/ca" of the container "hostsrv.com" respectively. Then, the routing node of the network side may route the container set, which is obtained by the second-level resolution, according to a certain priority order. For example, the routing node of the network side may forward the content request packet to Beijing, and after the content request packet is forwarded to Beijing, a forwarding entry to the container "airchina/ca1314" may exist in a Beijing container, and finally the content request packet is forwarded to the terminal 1 through the container "airchina/ca1314". It should be noted that, as seen from the foregoing description, the embodiment of the present invention can well support a multi-homing (Multi-homing) scenario.

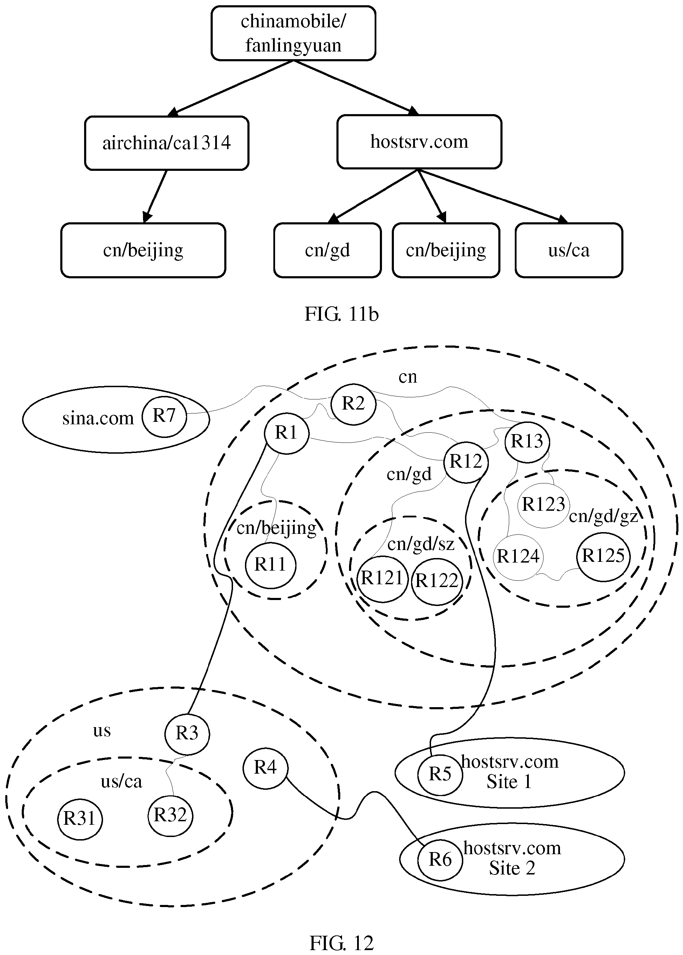

The foregoing resolution process may be indicated by a container resolution tree shown in FIG. 11b, where a root node of the container resolution tree is a target container, and a relationship between any node in the tree and a parent node of the node is: a container represented by the node is an access container of a container represented by the parent node; when a terminal container, which requests content stored in the target container, is located outside the container resolution tree, the content request packet is forwarded from a leaf node of the tree to the root node of the tree according to a certain priority order. Optionally, a forwarding route may be determined for the content request packet along a leftmost branch of the container resolution tree at the beginning, and when the determining the route fails, a forwarding route is determined for the content request packet from left to right along middle branches of the container resolution tree; a forwarding route may also be determined for the content request packet from right to left; optionally, a leaf node that appears frequently may be searched for and a forwarding route is determined for the content request packet from the leaf node, but the embodiment of the present invention is not limited thereto.

It should be understood that, in the foregoing embodiment, the routing node performs iterative resolution twice, so as to route the content request packet to the target container. The number of times of iterative resolution depends on a positional relationship between the terminal container that sends the content request packet and the target container, but the embodiment of the present invention does not limit the number of times of iterative resolution.

Generally, in the movement process of the target container, when a terminal container requests content in the target container, a forwarding route for a content request packet sent by the terminal container is as follows: if the terminal container is within a container resolution tree of the target container, and the terminal container is in an access container of the target container, the content request packet may be forwarded to the target container through an internal route of the access container; if the terminal container is within the container resolution tree of the target container, but the terminal container is not in the access container of the target container, the content request packet is forwarded towards a parent node of the terminal container according to a certain priority order; if the terminal container is not within the container resolution tree of the target container, the content request packet is forwarded from a leaf node of the container resolution tree according to a certain priority order.

It should be noted that, the examples of FIG. 9 to FIG. 11b are intended to help a person skilled in the art better understand the embodiment of the present invention, but are not intended to limit the scope of the embodiment of the present invention. According to the provided examples of FIG. 9 to FIG. 11b, a person skilled in the art can definitely make various equivalent modifications or changes, and the modifications or changes also fall within the scope of the embodiment of the present invention.

The value of the sequence number of each step does not indicate an execution sequence, the execution sequence of the steps should be determined according to a function and an internal logic thereof, but should not form any limitation to the implementation process of the embodiment of the present invention.

As shown in FIG. 12, a whole Chinese network may be regarded as a national topology-dependent container "cn", "cn" gathers provincial containers such as the Guangdong province "cn/gd", the Beijing city "cn/beijing", and so on, "cn/gd" gathers lower-level topology-dependent containers such as Shenzhen "cn/gd/sz", and so on. Similarly, an American network may also be regarded as a national container "us", and the container "us" includes a lower-level topology-dependent container "us/ca". Further, a large ISP may also perform level-by-level aggregation according to topological containers, for example, China Telecom, acting as a large container "ct", gathers provincial containers such as "ct/gd" and "ct/sd", and "ct/gd" gathers municipal containers such as "ct/gd/sz", but the embodiment of the present invention is not limited thereto. Due to a longest-match feature of an FIB table, in the American container "us", only one route to "cn" is required to match all containers with "cn" being a prefix; therefore, topology-dependent containers at highest levels in the topological relationship, such as "cn", "us", or "ct", act as global containers, and routes thereof are capable of spreading as global routes. A global container is a container that is capable of being globally routed, and that the route thereof acts as a global route means that routing tables of all routing nodes have a routing entry of the global container. The global container does not have an access container.

Optionally, according to needs of actual deployment, besides the topology-dependent container being at the highest level in the topological relationship, some topology-dependent containers at high levels, such as provincial containers "cn/gd", "cn/sd", or "us/ca", may also act as topology-dependent global containers, and routes thereof are capable of spreading as global routes, but the embodiment of the present invention is not limited thereto. In the embodiment of the present invention, the topology-dependent container acting as a global container is called a topology-dependent global container.

Optionally, a global container may further include a topology-independent global container, and the topology-independent global container includes a topology-independent large container. Topology-independent large containers refer to a very small number of topology-independent containers each with a large number of visits in an existing network, for example, large ISPs, large companies, and large portal websites, such as "sina.com", "google.com", and "baidu.com", which have visits thousands or tens of thousands of times more than a common container, and are capable of acting as topology-independent global containers, and routes thereof are also capable of spreading as global routes.

Optionally, the topology-independent large containers may also be provided with access services by high-level topology-dependent containers, so that the topology-independent large containers may be used as local area routes of routing nodes included in access containers thereof. However, when the topology-independent large containers are used as global containers, routing table matching efficiency of the whole network may be greatly improved, and it is convenient for the large companies to autonomously and flexibly adjust routes to better provide services such as multi-homing, load sharing, and Anycast; further, because the number of the containers is very small, the size of a core routing table does not increase greatly, but the embodiment of the present invention is not limited thereto.

To sum up, the routing table of this node includes a global container routing entry, the global container routing entry includes a container identifier of a global container and a first interface corresponding to the container identifier of the global container, the first interface is an interface connecting this node to a next-hop routing node of the global container, the global container is a container that is capable of being globally routed, and the global container includes a topology-dependent global container and/or a topology-independent global container. Using a routing node R121 included in the container "cn/gd/sz" in FIG. 12 as an example, a routing table of the routing node includes routing entries of the containers "cn" and "us", but because the routing node R121 can reach the container "us" and routing nodes R1 and R2 of the container "cn" only through a routing node R12, the first interface corresponding to the container identifiers "cn" and "us" is an interface connecting R121 to R12.

For a lower-level container of the topology-dependent global container, the topology-dependent global container provides an access service for the lower-level container, so that correspondingly, the route of the lower-level container is capable of acting as an internal route of a routing node included in the topology-dependent global container, and does not need to spread out of the topology-dependent global container. Specifically, the route of the lower-level container may be included only in a routing table of a routing node included in the topology-dependent global container. Generally, any topology-dependent container except the topology-dependent global container in the topological relationship provides an access service for lower-level containers thereof, and correspondingly, routes of the lower-level containers thereof are all capable of acting as internal routes of the topology-dependent container, and do not need to spread out of the topology-dependent container. For ease of description, topology-dependent containers in the following refer to other topology-dependent containers in the topological relationship than the foregoing topology-dependent global containers. From the perspective of this node, the routing table of this node may include a topology-dependent container routing entry for routing based on a topology-dependent container, and through the topology-dependent container routing entry, a route of a lower-level container of a home container of this node acts as an internal route of this node and does not spread out of the home container of this node. Not spreading out of the home container of this node means that no routing entry of the lower-level container of the home container of this node exists in a routing table of a routing node outside the home container of this node, so that the routing node outside the home container of this node needs to be routed to the lower-level container with the help of the home container of this node. For example, the routing table of the routing nodes R1 and R2 may include routing entries of provincial containers, such as "cn/sd" and "cn/gd", which act as lower-level containers of the home container "cn" of R1 and R2, and their routes are capable of acting as local area routes of the routing nodes R1 and R2, and do not need to spread out of the container "cn". Similarly, the routing table of the routing nodes R12 and R13 may include routing entries of "cn/gd/sz" acting as the lower-level container of the home container "cn/gd" of R12 and R13, and their routes are also capable of acting as local area routes of R12 and R13, and do not need to spread out of the container "cn/gd". Therefore, the routing nodes R1 and R2 of the container "cn" can find the route of "cn/gd/sz" in the routing table of the routing nodes R12 and R13 only by entering the container "cn/gd".

Specifically, the routing table of this node may include a route of a lower-level container of a home container of this node, a routing entry of the lower-level container includes a container identifier of the lower-level container and a second interface corresponding to the container identifier of the lower-level container, and the second interface is an interface connecting this node to the lower-level container. For example, a routing entry of a routing table of the routing node R12 may include the container identifier "cn/gd/sz" and an interface connecting R12 to R121.

A topology-independent small container refers to a topology-independent container with a small number of visits, and there are a lot of containers of this kind in the network, such as small companies, organizations, home networks, and personal digital apparatuses, which is also a main factor causing the routing scalability problem in existing ICN systems such as an NDN. In the embodiment of the present invention, for a container of this kind, a topology-dependent container may provide an access service for the container, and correspondingly, a route of a container of this kind may be limited inside an access container of the container, and does not need to spread out of the access container of the container, so that the size of a core routing table is greatly reduced. For example, as shown in FIG. 12, a container "hostsrv.com" has enterprise networks in two places, and it may be regarded that two topology-dependent containers "cn/gd" and "us/ca" provide an access service for this container, so that a routing entry of the container "hostsrv.com" only exists in a routing table of a routing node included in the two containers, and a container other than the two containers can be routed to the container "hostsrv.com" only with the help of the topology-dependent containers "cn/gd" and "us/ca". Therefore, the routing table of this node may further include a topology-independent small container routing entry, the topology-independent small container routing entry includes a container identifier of a topology-independent small container and a third interface corresponding to the container identifier of the topology-independent small container, and the third interface is an interface connecting this node to a next-hop routing node of the topology-independent small container. For example, a routing table of a routing node R4 may include the container identifier "hostsrv.com" and an interface connecting R4 to R6.

To sum up, in the embodiment of the present invention, the number of routing entries of a core routing table is basically equal to "the number of routes of topology-dependent global containers" plus "the number of routes of topology-independent global containers". The number of routes of both of the two kinds is small, so that the size of the entire routing table may be even less than the number of entries of a core routing table in a present Internet router. Therefore, in the embodiment of the present invention, container information of content is added in addition to a content name to extend a content attribute in an ICN system, a route of a topology-independent small container is limited in a topology-dependent container that provides an access service for the topology-independent small container, and a route of a lower-level container of a topology-dependent container is limited in the topology-dependent container, so that the number of entries of a core routing table is greatly reduced, thereby effectively solving the routing scalability problem in existing ICN systems such as an NDN.

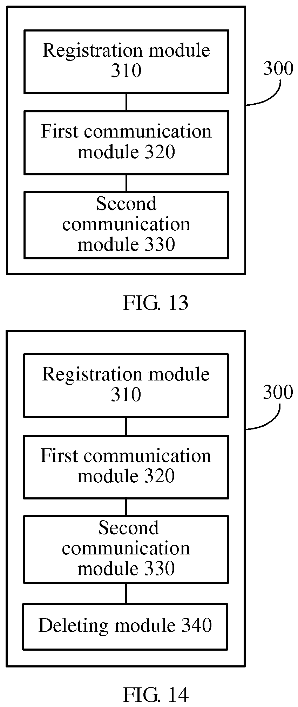

The data source movement processing method and the packet forwarding method according to the embodiments of the present invention have been described in detail with reference to FIG. 1 to FIG. 12. A container movement management apparatus and a router according to embodiments of the present invention are hereinafter described in detail with reference to FIG. 13 to FIG. 23.

FIG. 13 is a schematic block diagram of a container movement management apparatus 300 applied in an ICN according to an embodiment of the present invention, and as shown in FIG. 13, the container movement management apparatus 300 includes:
a registration module 310, configured to, when a target container from a first container enters a second container, register a route of the target container in the second container, where the route of the target container includes a container identifier of the target container and a port corresponding to the identifier of the target container, so that a content request packet carrying the container identifier of the target container is capable of being forwarded to the target container through the route of the target container;
a first communication module 320, configured to, when the target container from the first container enters the second container, communicate with a resolution system, so that the resolution system updates an access container of the target container from the first container to the second container, where the resolution system is configured to return, upon receiving a resolution request that is sent by a requester and used to obtain container information of the access container of the target container, the container information of the access container of the target container to the requester, so that the content request packet carrying the container identifier of the target container is capable of being forwarded to the target container through the access container, where the access container is a container that includes at least one container and includes a forwarding entry used to route the content request packet to the at least one container; and
a second communication module 330, configured to, when the target container moves in the first container, communicate with the first container, so that the route of the target container in the first container is updated.

All of the target container, the first container, the second container, and the access container are storage spaces used to store content.

Therefore, in the container movement management apparatus according to the embodiment of the present invention, the data source is abstracted as a container, and in the movement process of the target container, the route of the target container is updated and the information of the access container of the target container is updated in the resolution system. Therefore, the data source movement is supported without introducing frequent and cumbersome route updates and without changing a content name of content, thereby maintaining persistence of the content name, enhancing feasibility of an ICN architecture, and improving user experience.

Optionally, the registration module 310 includes:
a sending unit 311, configured to, when the target container from the first container enters the second container, send registration request information to the second container, so that the second container registers the route of the target container in the second container according to the registration request information.

Optionally, in another embodiment, the target container is an access container of at least one third container, and the at least one third container synchronously moves along with the target container, so that in the movement process, the access container of the at least one third container is always the target container.

Optionally, the second container includes at least one routing node; the registration module 310 is specifically configured to register the route of the target container in a routing table of one or more routing nodes among the at least one routing node included in the second container, so that the route of the target container does not spread out of the second container.

Optionally, in another embodiment, the first container includes at least one routing node; the second communication module 330 is specifically configured to communicate with the first container, so that the route of the target container is updated in a routing table of one or more routing nodes among the at least one routing node included in the first container, and that the route of the target container does not spread out of the first container.

Optionally, in another embodiment, the first communication module 320 is further configured to, when the target container from the first container enters the second container, communicate with the resolution system to register cacheability and an aging time of the second container in the resolution system, where the cacheability indicates that a mapping relationship between the target container and the second container is capable of being cached on a network side or a user equipment side, and the aging time indicates a valid time for which the mapping relationship is cached.

Optionally, in another embodiment, as shown in FIG. 14, the container movement management apparatus 300 further includes:
a deleting module 340, configured to, when the target container from the first container enters the second container, delete the route of the target container in the first container.

Optionally, in another embodiment, the deleting module 340 is specifically configured to send route deletion instruction information to the first container, so that the first container deletes the route of the target container according to the route deletion instruction information.

The container movement management apparatus 300 according to the embodiment of the present invention may correspond to a border routing node or a target container that moves or an independent processing apparatus in the data source movement processing method according to the embodiment of the present invention, and the foregoing and other operations and/or functions of the modules of the container movement management apparatus 300 are for implementing the corresponding processes of the methods in FIG. 1 and FIG. 2 respectively, which, for brevity, are not repeated herein.

Therefore, in the container movement management apparatus according to the embodiment of the present invention, the data source is abstracted as a container, and in the movement process of the target container, the route of the target container is updated and the information of the access container of the target container is updated in the resolution system. Therefore, the data source movement is supported without introducing frequent and cumbersome route updates and without changing a content name of content, thereby maintaining persistence of the content name, enhancing feasibility of an ICN architecture, and improving user experience.

The data source movement processing method according to the embodiment of the present invention has been described in detail from the perspective of the container movement management apparatus with reference to FIG. 13 and FIG. 14. The packet forwarding method according to the embodiment of the present invention is hereinafter described in detail from the perspective of a router with reference to FIG. 14 to FIG. 18.

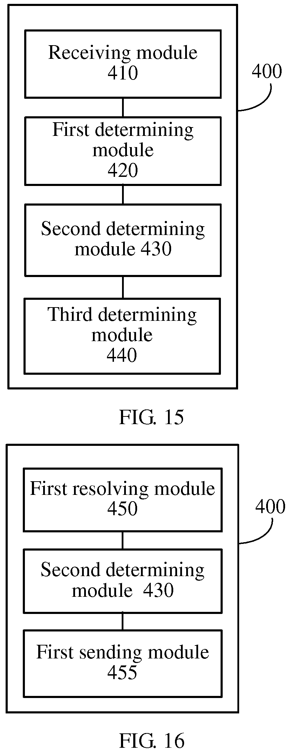

FIG. 15 is a schematic block diagram of a router 400 according to an embodiment of the present invention, and as shown in FIG. 15, the router 400 includes:
a receiving module 410, configured to receive a content request packet, where the content request packet carries a content name of requested content and container information, the container information includes a container identifier and a resolvable flag of a container storing the requested content, and the resolvable flag is used to identify whether the container is resolvable;
a first determining module 420, configured to determine whether a forwarding entry matching the content name of the requested content carried by the content request packet received by the receiving module 410 exists in a forwarding information base FIB;
a second determining module 430, configured to, when the first determining module 420 determines that no forwarding entry matching the content name of the requested content exists in the FIB, determine whether a forwarding entry matching the container identifier carried in the content request packet exists in the FIB; and
a third determining module 440, configured to, when the second determining module 430 determines that no forwarding entry matching the container identifier carried in the content request packet exists in the FIB, determine container information of an access container of a resolvable container according to the resolvable flag carried in the content request packet, so as to determine a forwarding route for the content request packet according to the container information of the access container of the resolvable container.

Therefore, in the router according to the embodiment of the present invention, container information of content is added in addition to a content name to extend an attribute of the content in an ICN architecture, and a forwarding route may be determined for a content request packet according to a container identifier and a resolvable flag carried in the content request packet, so that in a movement process of a data source, the content request packet may be sent to the moving data source without frequent involvement of a resolution system, thereby improving user experience.

Optionally, the container in the container set is a storage space used to store a group of content. Optionally, the container includes at least one routing node, and through one or more routing nodes among the at least one routing node, the requested content is capable of being routed in the container, or the requested content is capable of being routed through the container. The content name of the requested content corresponds to one or more home containers, and the home container of the requested content is a container where the requested content is capable of being directly routed. Optionally, the container is an access container of one or more first other containers; and/or
one or more second other containers are access containers of the container, where the access container is a container that includes at least one container and includes a forwarding entry used to route the content request packet to the at least one container.

Optionally, a forwarding entry in the FIB includes a content name prefix and an interface corresponding to the content name prefix; the first determining module 420 is specifically configured to determine, according to whether a prefix of the content name of the requested content matches a content name prefix in a forwarding entry in the FIB, whether a forwarding entry matching the content name of the requested content exists in the FIB.

Optionally, in another embodiment, a forwarding entry in the FIB includes a preset container identifier and an interface corresponding to the preset container identifier; the second determining module 430 is specifically configured to match the container identifier carried in the content request packet with a preset container identifier in the FIB, to determine whether a forwarding entry matching the container identifier carried in the content request packet exists in the FIB.

Optionally, in another embodiment, as shown in FIG. 16, the router 400 further includes:
a first resolving module 450, configured to, when the access container of the resolvable container determined by the third determining module 440 is resolvable, resolve the access container of the resolvable container, and when an access container obtained by the resolution is resolvable, further resolve the access container obtained by the resolution until an access container obtained by the further resolution is irresolvable, so as to obtain container identifiers of access containers of all resolvable containers of the requested content.

The second determining module 430 is further configured to match the container identifiers of the access containers of all the resolvable containers, which are obtained by the first resolving module 450 by the resolution, with a preset container identifier in the FIB, so as to determine whether a forwarding entry matching at least one container identifier among the container identifiers of the access containers of all the resolvable containers exists in the FIB.

Correspondingly, the router 400 further includes:
a first sending module 455, configured to, when the second determining module 430 determines that a forwarding entry matching at least one container identifier among the container identifiers of the access containers of all the resolvable containers exists in the FIB, send the content request packet according to a port in the matched forwarding entry.

Optionally, in another embodiment, the first sending module 455 is further configured to, when the second determining module 430 determines that no forwarding entry matching any container identifier among the container identifiers of the access containers of all the resolvable containers exists in the FIB, send the content request packet according to a default interface or discard the content request packet.

Optionally, in another embodiment, the second determining module 430 is further configured to match a container identifier of an access container obtained by the resolution with a preset container identifier in the FIB, to determine whether a forwarding entry matching the container identifier of the access container obtained by the resolution exists in the FIB.

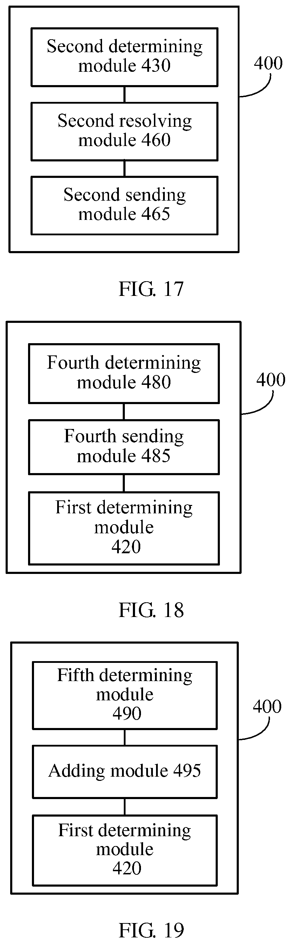

Correspondingly, as shown in FIG. 17, the router 400 further includes:
a second resolving module 460, configured to, when the second determining module 430 determines that no forwarding entry matching the container identifier of the access container obtained by the resolution exists in the FIB and the access container obtained by the resolution is resolvable, further resolve the access container obtained by the resolution until an access container obtained by the further resolution is irresolvable or the second determining module 430 determines that a forwarding entry matching a container identifier of an access container obtained by the further resolution exists in the FIB; and
a second sending module 465, configured to, when the second determining module 430 determines that a forwarding entry matching the container identifier of the access container obtained by the further resolution exists in the FIB, send the content request packet according to a port in the matched forwarding entry.

Optionally, in another embodiment, the second sending module 465 is further configured to, when the second determining module 430 determines that no forwarding entry matching the container identifier of the access container obtained by the further resolution exists in the FIB and the access container obtained by the further resolution is irresolvable, send the content request packet according to a default interface or discard the content request packet.

Optionally, in another embodiment, the third determining module 440 is specifically configured to determine the resolvable container according to the resolvable flag carried in the content request packet, and obtain the container information of the access container of the resolvable container, which is cached and still valid, from a network side; and/or
the third determining module 440 is specifically configured to determine the resolvable container according to the resolvable flag carried in the content request packet, and obtain the container information of the access container of the resolvable container from a resolution system.

Optionally, in another embodiment, the container information of the access container of the resolvable container includes cacheability and an aging time, the cacheability indicates that a mapping relationship between the resolvable container and the access container of the resolvable container is capable of being cached on the network side or the user equipment side, and the aging time indicates a valid time for which the mapping relationship is cached.

Correspondingly, the router 400 further includes:
a caching module 470, configured to cache the mapping relationship between the resolvable container determined by the third determining module 440 and the access container of the resolvable container on the network side, so as to facilitate sharing with other routing nodes or user equipments.

Optionally, in another embodiment, the router 400 further includes:
a third sending module 475, configured to, when the first determining module 420 determines that a forwarding entry matching the content name of the requested content exists in the FIB, send the content request packet according to an interface in the matched forwarding entry; or configured to, when the second determining module 430 determines that a forwarding entry matching the container identifier carried in the content request packet exists in the FIB, send the content request packet according to a port in the matched forwarding entry.

Optionally, in another embodiment, as shown in FIG. 18, the router 400 further includes:
a fourth determining module 480, configured to, before the first determining module 420 determines whether a forwarding entry matching the content name of the requested content exists in the FIB, determine whether content matching the content name of the requested content exists in a content store CS; and
a fourth sending module 485, configured to, when the fourth determining module 480 determines that content matching the content name of the requested content exists in the CS, send the matched content to a sender of the content request packet.

The first determining module 420 is specifically configured to, when the fourth determining module 480 determines that no content matching the content name of the requested content exists in the CS, execute the step of determining whether a forwarding entry matching the content name of the requested content exists in the FIB.

Optionally, in another embodiment, as shown in FIG. 19, the router 400 further includes:
a fifth determining module 490, configured to, when the fourth determining module 480 determines that no content matching the content name of the requested content exists in the CS, determine whether a PIT entry matching the content name of the requested content exists in a pending information table PIT; and
an adding module 495, configured to, when the fifth determining module 490 determines that a PIT entry matching the content name of the requested content exists in the PIT, add an interface corresponding to the sender of the content request packet to the matched PIT entry.

The first determining module 420 is specifically configured to, when the fifth determining module 490 determines that no PIT entry matching the content name of the requested content exists in the PIT, execute the step of determining whether a forwarding entry matching the content name of the requested content exists in the FIB.

Optionally, a forwarding entry of the resolvable container is only included in the access container of the resolvable container, so that a route of the resolvable container does not spread out of the access container of the resolvable container.

Optionally, in another embodiment, the access container of the resolvable container includes at least one routing node; correspondingly, a forwarding entry of the resolvable container is only included in the access container of the resolvable container, so that a route of the resolvable container does not spread out of the access container of the resolvable container, which includes the following:

The forwarding entry of the resolvable container is only included in a routing table of one or more routing nodes among at least one routing node included in the access container of the resolvable container, so that the route of the resolvable container does not spread out of the at least one routing node included in the access container of the resolvable container.

The router 400 according to the embodiment of the present invention may correspond to a routing node in the packet forwarding method according to the embodiment of the present invention, and the foregoing and other operations and/or functions of the modules of the router 400 are for implementing the corresponding processes of the methods in FIG. 3 to FIG. 12 respectively, which, for brevity, are not repeated herein.

Therefore, in the router according to the embodiment of the present invention, container information of content is added in addition to a content name to extend an attribute of the content in an ICN architecture, and a forwarding route may be determined for a content request packet according to a container identifier and a resolvable flag carried in the content request packet, so that in a movement process of a data source, the content request packet may be sent to the moving data source without frequent involvement of a resolution system, thereby improving user experience.

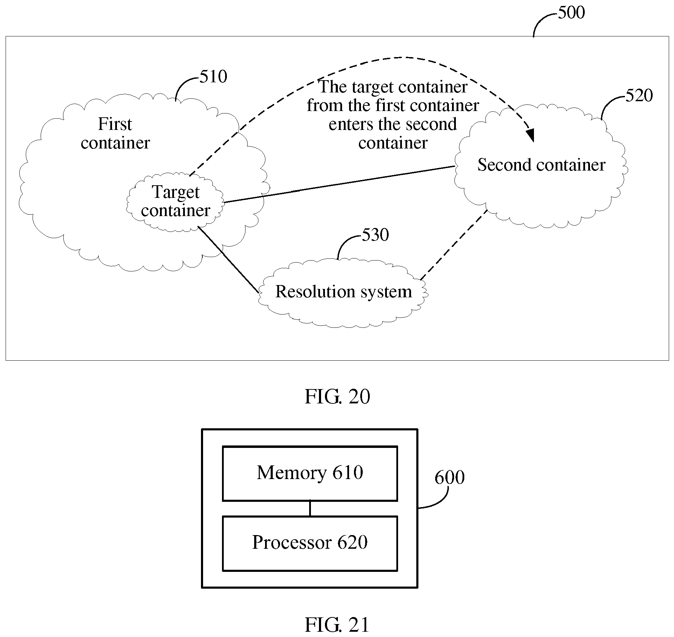

FIG. 20 illustrates an information centric network ICN system 500 according to an embodiment of the present invention, which includes a first container 510, a second container 520, and a resolution system 530 in any one of the foregoing embodiments, and the first container and the second container include the router shown in any one of FIG. 15 to FIG. 19.

FIG. 21 is a schematic block diagram of a container movement management apparatus 600 according to another embodiment of the present invention, and as shown in FIG. 21, the container movement management apparatus 600 includes a memory 610 and a processor 620. The processor 620 is configured to execute an instruction stored in the memory 610. Specifically:
The processor 620 is configured to, when a target container from a first container enters a second container, register a route of the target container in the second container, where the route of the target container includes a container identifier of the target container and a port corresponding to the identifier of the target container, so that a content request packet carrying the container identifier of the target container is capable of being forwarded to the target container through the route of the target container; when the target container from the first container enters the second container, communicate with a resolution system, so that the resolution system updates an access container of the target container from the first container to the second container, where the resolution system is configured to return, upon receiving a resolution request that is sent by a requester and used to obtain container information of the access container of the target container, the container information of the access container of the target container to the requester, so that the content request packet carrying the container identifier of the target container is capable of being forwarded to the target container through the access container, where the access container is a container that includes at least one container and includes a forwarding entry used to route the content request packet to the at least one container; and when the target container moves in the first container, communicate with the first container, so that the route of the target container in the first container is updated. All of the target container, the first container, the second container, and the access container are storage spaces used to store content.

Therefore, in the container movement management apparatus according to the embodiment of the present invention, the data source is abstracted as a container, and in the movement process of the target container, the route of the target container is updated and the information of the access container of the target container is updated in the resolution system. Therefore, the data source movement is supported without introducing frequent and cumbersome route updates and without changing a content name of content, thereby maintaining persistence of the content name, enhancing feasibility of an ICN architecture, and improving user experience.

Optionally, the container movement management apparatus 600 further includes a sender 630, configured to, when the target container from the first container enters the second container, send registration request information to the second container, so that the second container registers the route of the target container in the second container according to the registration request information.

Optionally, in another embodiment, the target container is an access container of at least one third container, and the at least one third container synchronously moves along with the target container, so that in the movement process, the access container of the at least one third container is always the target container.

Optionally, the second container includes at least one routing node; the processor 620 is specifically configured to register the route of the target container in a routing table of one or more routing nodes among the at least one routing node included in the second container, so that the second container becomes an access container of the target container, and that the route of the target container does not spread out of the second container.

Optionally, in another embodiment, the processor 620 is specifically configured to communicate with the first container, so that the route of the target container is updated in the routing table of one or more routing nodes among the at least one routing node included in the first container, and that the route of the target container does not spread out of the first container.

Optionally, in another embodiment, the processor 620 is further configured to, when the target container from the first container enters the second container, communicate with the resolution system to register cacheability and an aging time of the second container in the resolution system, where the cacheability indicates that a mapping relationship between the target container and the second container is capable of being cached on a network side or a user equipment side, and the aging time indicates a valid time for which the mapping relationship is cached.

Optionally, in another embodiment, the processor 620 is further configured to, when the target container from the first container enters the second container, delete the route of the target container in the first container.

Optionally, in another embodiment, the sender 630 is further configured to send route deletion instruction information to the first container, so that the first container deletes the route of the target container according to the route deletion instruction information.

The container movement management apparatus 600 according to the embodiment of the present invention may correspond to a border routing node or a target container that moves or an independent processing apparatus in the data source movement processing method according to the embodiment of the present invention, and the foregoing and other operations and/or functions of the modules of the container movement management apparatus 600 are for implementing the corresponding processes of the methods in FIG. 1 and FIG. 2 respectively, which, for brevity, are not repeated herein.

Therefore, in the container movement management apparatus according to the embodiment of the present invention, the data source is abstracted as a container, and in the movement process of the target container, the route of the target container is updated and the information of the access container of the target container is updated in the resolution system. Therefore, the data source movement is supported without introducing frequent and cumbersome route updates and without changing a content name of content, thereby maintaining persistence of the content name, enhancing feasibility of an ICN architecture, and improving user experience.

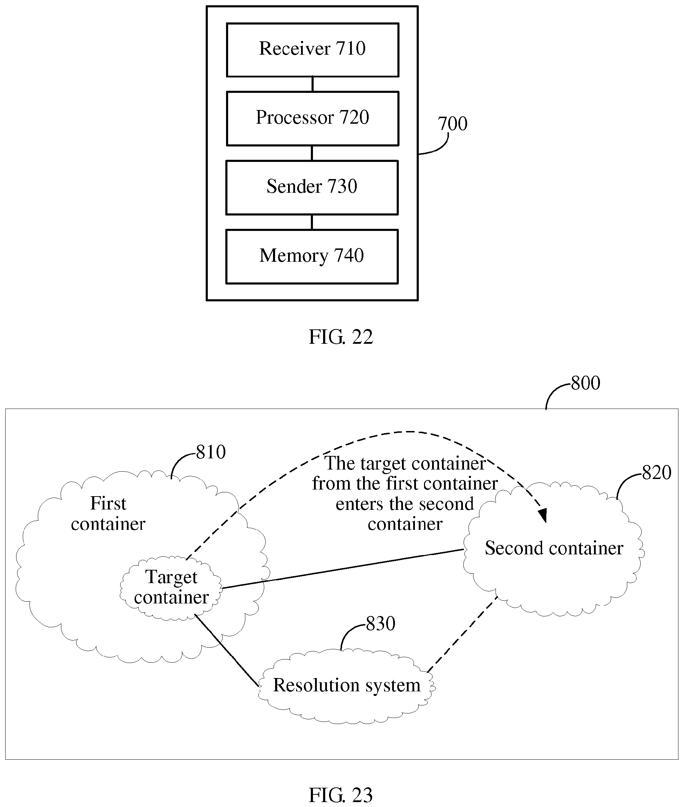

FIG. 22 is a schematic block diagram of a router 700 according to another embodiment of the present invention, and as shown in FIG. 22, the router 700 includes:
a receiver 710, configured to receive a content request packet, where the content request packet carries a content name of requested content and container information, the container information includes a container identifier and a resolvable flag of a container storing the requested content, and the resolvable flag is used to identify whether the container is resolvable; and
a processor 720, configured to determine whether a forwarding entry matching the content name of the requested content carried by the content request packet received by the receiver 710 exists in a forwarding information base FIB; when no forwarding entry matching the content name of the requested content exists in the FIB, determine whether a forwarding entry matching the container identifier carried in the content request packet exists in the FIB; and when no forwarding entry matching the container identifier carried in the content request packet exists in the FIB, determine container information of an access container of a resolvable container according to the resolvable flag carried in the content request packet, so as to determine a forwarding route for the content request packet according to the container information of the access container of the resolvable container.

Therefore, in the router according to the embodiment of the present invention, container information of content is added in addition to a content name to extend an attribute of the content in an ICN architecture, and a forwarding route may be determined for a content request packet according to a container identifier and a resolvable flag carried in the content request packet, so that in a movement process of a data source, the content request packet may be sent to the moving data source without frequent involvement of a resolution system, thereby improving user experience.

Optionally, the container in the container set is a storage space used to store a group of content. Optionally, the container includes at least one routing node, and through one or more routing nodes among the at least one routing node, the requested content is capable of being routed in the container, or the requested content is capable of being routed through the container. The content name of the requested content corresponds to one or more home containers, and the home container of the requested content is a container where the requested content is capable of being directly routed. Optionally, the container is an access container of one or more first other containers; and/or
one or more second other containers are access containers of the container, where the access container is a container that includes at least one container and includes a forwarding entry used to route the content request packet to the at least one container.

Optionally, a forwarding entry in the FIB includes a content name prefix and an interface corresponding to the content name prefix; the processor 720 is specifically configured to determine, according to whether a prefix of the content name of the requested content matches a content name prefix in a forwarding entry in the FIB, whether a forwarding entry matching the content name of the requested content exists in the FIB.

Optionally, in another embodiment, a forwarding entry in the FIB includes a preset container identifier and an interface corresponding to the preset container identifier; the processor 720 is specifically configured to match the container identifier carried in the content request packet with a preset container identifier in the FIB, to determine whether a forwarding entry matching the container identifier carried in the content request packet exists in the FIB.

Optionally, in another embodiment, the processor 720 is further configured to, when the access container of the resolvable container is resolvable, resolve the access container of the resolvable container, and when an access container obtained by the resolution is resolvable, further resolve the access container obtained by the resolution until an access container obtained by the further resolution is irresolvable, so as to obtain container identifiers of access containers of all resolvable containers of the requested content; and match the container identifiers of the access containers of all the resolvable containers with a preset container identifier in the FIB, so as to determine whether a forwarding entry matching at least one container identifier among the container identifiers of the access containers of all the resolvable containers exists in the FIB.

Correspondingly, the router 700 further includes:
a sender 730, configured to, when the processor 720 determines that a forwarding entry matching at least one container identifier among the container identifiers of the access containers of all the resolvable containers exists in the FIB, send the content request packet according to a port in the matched forwarding entry.

Optionally, the sender 730 is further configured to, when the processor 720 determines that no forwarding entry matching any container identifier among the container identifiers of the access containers of all the resolvable containers exists in the FIB, send the content request packet according to a default interface or discard the content request packet.

Optionally, in another embodiment, the processor 720 is further configured to match a container identifier of an access container obtained by the resolution with a preset container identifier in the FIB, to determine whether a forwarding entry matching the container identifier of the access container obtained by the resolution exists in the FIB; when no forwarding entry matching the container identifier of the access container obtained by the resolution exists in the FIB and the access container obtained by the resolution is resolvable, further resolve the access container obtained by the resolution until an access container obtained by the further resolution is irresolvable or a forwarding entry matching a container identifier of an access container obtained by the further resolution exists in the FIB.

Correspondingly, the router 700 further includes a sender 730, configured to, when the processor 720 determines that a forwarding entry matching the container identifier of the access container obtained by the further resolution exists in the FIB, send the content request packet according to a port in the matched forwarding entry.

Optionally, in another embodiment, the sender 730 is further configured to, when the processor 720 determines that no forwarding entry matching the container identifier of the access container obtained by the further resolution exists in the FIB and the access container obtained by the further resolution is irresolvable, send the content request packet according to a default interface or discard the content request packet.

Optionally, in another embodiment, the processor 720 is specifically configured to determine the resolvable container according to the resolvable flag carried in the content request packet, and obtain the container information of the access container of the resolvable container, which is cached and still valid, from a network side; and/or obtain the container information of the access container of the resolvable container from a resolution system.

Optionally, in another embodiment, the container information of the access container of the resolvable container includes cacheability and an aging time, the cacheability indicates that a mapping relationship between the resolvable container and the access container of the resolvable container is capable of being cached on the network side or the user equipment side, and the aging time indicates a valid time for which the mapping relationship is cached.

Correspondingly, the router 700 further includes:
a memory 740, configured to cache the mapping relationship between the resolvable container determined by the processor 730 and the access container of the resolvable container on the network side, so as to facilitate sharing with other routing nodes or user equipments.

Optionally, in another embodiment, the router 700 further includes:
a sender 730, configured to, when the processor 720 determines that a forwarding entry matching the content name of the requested content exists in the FIB, send the content request packet according to an interface in the matched forwarding entry; or configured to, when the processor 720 determines that a forwarding entry matching the container identifier carried in the content request packet exists in the FIB, send the content request packet according to a port in the matched forwarding entry.

Optionally, in another embodiment, the processor 720 is further configured to, before determining whether a forwarding entry matching the content name of the requested content exists in the FIB, determine whether content matching the content name of the requested content exists in a content store CS.

Correspondingly, the router further includes a sender 730 configured to, when the processor 720 determines that content matching the content name of the requested content exists in the CS, send the matched content to a sender of the content request packet.

The processor 720 is configured to, when no content matching the content name of the requested content exists in the CS, execute the step of determining whether a forwarding entry matching the content name of the requested content exists in the FIB.

Optionally, in another embodiment, the processor 720 is further configured to, when no content matching the content name of the requested content exists in the CS, determine whether a PIT entry matching the content name of the requested content exists in a pending information table PIT; when a PIT entry matching the content name of the requested content exists in the PIT, add an interface corresponding to the sender of the content request packet to the matched PIT entry; and when no PIT entry matching the content name of the requested content exists in the PIT, execute the step of determining whether a forwarding entry matching the content name of the requested content exists in the FIB.

Optionally, a forwarding entry of the resolvable container is only included in the access container of the resolvable container, so that a route of the resolvable container does not spread out of the access container of the resolvable container.

Optionally, in another embodiment, the access container of the resolvable container includes at least one routing node; correspondingly, a forwarding entry of the resolvable container is only included in the access container of the resolvable container, so that a route of the resolvable container does not spread out of the access container of the resolvable container, which includes the following:

The forwarding entry of the resolvable container is only included in a routing table of one or more routing nodes among at least one routing node included in the access container of the resolvable container, so that the route of the resolvable container does not spread out of the at least one routing node included in the access container of the resolvable container.

The router 700 according to the embodiment of the present invention may correspond to a routing node in the packet forwarding method according to the embodiment of the present invention, and the foregoing and other operations and/or functions of the modules of the router 700 are for implementing the corresponding processes of the methods in FIG. 3 to FIG. 12 respectively, which, for brevity, are not repeated herein.

Therefore, in the router according to the embodiment of the present invention, container information of content is added in addition to a content name to extend an attribute of the content in an ICN architecture, and a forwarding route may be determined for a content request packet according to a container identifier and a resolvable flag carried in the content request packet, so that in a movement process of a data source, the content request packet may be sent to the moving data source without frequent involvement of a resolution system, thereby improving user experience.

FIG. 23 illustrates an information centric network ICN system 800 according to another embodiment of the present invention, which includes a first container 810, a second container 820, and a resolution system 830 in any one of the foregoing embodiments, and the first container and the second container include the router shown in FIG. 22.

It should be understood that in the embodiments of the present invention, the term "and/or" is only an association relationship for describing the associated objects, and indicates that three relationships may exist, for example, A and/or B may represent the following three cases: A exists separately, both A and B exist, and B exists separately. In addition, the character "/" in the specification usually indicates that the former and later associated objects are in a "or" relationship.

A person of ordinary skill in the art may be aware that, method steps and units described with reference to the embodiments disclosed in this specification may be implemented by electronic hardware, computer software, or a combination of thereof. To clearly describe the interchangeability between the hardware and the software, the foregoing has generally described composition and steps of each embodiment according to functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiments are merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and the parts displayed as units may or may not be physical units, may be located in one position, or may be distributed on a plurality of network elements. Some or all of the units may be selected according to actual needs to achieve the objectives of the solutions of the embodiments of the present invention.

In addition, functional units in the embodiments of the present invention may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in a form of a software product. The computer software product is stored in a storage medium and includes several instructions for instructing a computer apparatus (which may be a personal computer, a server, or a network apparatus) to perform all or a part of the steps of the methods described in the embodiments of the present invention. The foregoing storage medium includes: any medium that can store program codes, such as a USB flash disk, a removable hard disk, a read-only memory (Read-Only Memory, ROM), a random access memory (Random Access Memory, RAM), a magnetic disk, or an optical disc.

The foregoing descriptions are merely specific embodiments of the present invention, but are not intended to limit the protection scope of the present invention. Any equivalent modification or replacement readily figured out by a person skilled in the art within the technical scope of the present invention shall fall within the protection scope of the present invention. Therefore, the protection scope of the present invention shall be subject to the protection scope of the claims.

## Claims

1. A packet forwarding method, comprising:
receiving (210) a content request packet, wherein the content request packet carries a content name of requested content and container information, the container information comprises a container identifier and a resolvable flag of a container storing the requested content, and the resolvable flag is used to identify whether the container is resolvable;
determining (220) whether a forwarding entry matching the content name of the requested content exists in a forwarding information base FIB;
when no forwarding entry matching the content name of the requested content exists in the FIB, determining (230) whether a forwarding entry matching the container identifier carried in the content request packet exists in the FIB; and
when no forwarding entry matching the container identifier carried in the content request packet exists in the FIB, determining (240) container information of an access container of a resolvable container when the resolvable flag carried in the content request packet identified that the container is resolvable, so as to determine a forwarding route for the content request packet according to the container information of the access container of the resolvable container;
wherein the container is a storage space used to store a group of content.

2. The method according to claim 1, wherein the content name of the requested content corresponds to one or more home containers, and the home container of the requested content is a container where the requested content is capable of being directly routed.

3. The method according to any one of claims 1-2, further comprising:
when the access container of the resolvable container is resolvable, resolving (250) the access container of the resolvable container;
when an access container obtained by the resolution is resolvable, further resolving (252) the access container obtained by the resolution until an access container obtained by the further resolution is irresolvable, so as to obtain container identifiers of access containers of all resolvable containers of the requested content;
matching (254) the container identifiers of the access containers of all the resolvable containers with a preset container identifier in the FIB, so as to determine whether a forwarding entry matching at least one container identifier among the container identifiers of the access containers of all the resolvable containers exists in the FIB; and
when a forwarding entry matching at least one container identifier among the container identifiers of the access containers of all the resolvable containers exists in the FIB, sending (256) the content request packet according to a port in the matched forwarding entry.

4. The method according to any one of claims 1 to 3, wherein the step of determining container information of an access container of a resolvable container when the resolvable flag carried in the content request packet identified that the container is resolvable comprises:
determining (241) the resolvable container when the resolvable flag carried in the content request packet identified that the container is resolvable;
obtaining (242) the container information of the access container of the resolvable container, which is cached and still valid, from a network side; and/or
obtaining (242) the container information of the access container of the resolvable container from a resolution system.

5. The method according to any one of claims 1 to 4, wherein the container information of the access container of the resolvable container comprises cacheability and an aging time, the cacheability indicates that a mapping relationship between the resolvable container and the access container of the resolvable container is capable of being cached on the network side or a user equipment side, the aging time indicates a valid time for which the mapping relationship is cached, and when a time, for which the mapping relationship is cached, exceeds the aging time, the cached mapping relationship becomes invalid; and
the method further comprises:
caching the mapping relationship between the resolvable container and the access container of the resolvable container on the network side, so as to facilitate sharing with other routing nodes or user equipments.

6. The method according to any one of claims 1 to 5, further comprising:
before the step of determining whether a forwarding entry matching the content name of the requested content exists in the FIB, determining (272) whether content matching the content name of the requested content exists in a content store CS;
when content matching the content name of the requested content exists in the CS, sending (274) the matched content to a sender of the content request packet; and
when no content matching the content name of the requested content exists in the CS, executing (220a) the step of determining whether a forwarding entry matching the content name of the requested content exists in the FIB.

7. The method according to claim 6, further comprising:
when no content matching the content name of the requested content exists in the CS, determining (276) whether a PIT entry matching the content name of the requested content exists in a pending information table PIT;
when a PIT entry matching the content name of the requested content exists in the PIT, adding (278) an interface corresponding to the sender of the content request packet to the matched PIT entry; and
when no PIT entry matching the content name of the requested content exists in the PIT, executing (220b) the step of determining whether a forwarding entry matching the content name of the requested content exists in the FIB.

8. A router (400), **characterized by**:
a receiving module (410), configured to receive a content request packet, wherein the content request packet carries a content name of requested content and container information, the container information comprises a container identifier and a resolvable flag of a container storing the requested content, and the resolvable flag is used to identify whether the container is resolvable;
a first determining module (420), configured to determine whether a forwarding entry matching the content name of the requested content carried by the content request packet received by the receiving module (410) exists in a forwarding information base FIB;
a second determining module (430), configured to: when the first determining module (420) determines that no forwarding entry matching the content name of the requested content exists in the FIB, determine whether a forwarding entry matching the container identifier carried in the content request packet exists in the FIB; and
a third determining module (440), configured to: when the second determining module (430) determines that no forwarding entry matching the container identifier carried in the content request packet exists in the FIB, determine container information of an access container of a resolvable container when the resolvable flag carried in the content request packet identified that the container is resolvable, so as to determine a forwarding route for the content request packet according to the container information of the access container of the resolvable container;
wherein the container is a storage space used to store a group of content.

9. The router according to claim 8, wherein the content name of the requested content corresponds to one or more home containers, and the home container of the requested content is a container where the requested content is capable of being directly routed.

10. The router according to claim 8, further comprising:
a first resolving module (450), configured to: when the access container of the resolvable container determined by the third determining module (440) is resolvable, resolve the access container of the resolvable container, and when an access container obtained by the resolution is resolvable, further resolve the access container obtained by the resolution until an access container obtained by the further resolution is irresolvable, so as to obtain container identifiers of access containers of all resolvable containers of the requested content; wherein
the second determining module (430) is further configured to match the container identifiers of the access containers of all the resolvable containers, which are obtained by the resolution by the first resolving module (450), with a preset container identifier in the FIB, so as to determine whether a forwarding entry matching at least one container identifier among the container identifiers of the access containers of all the resolvable containers exists in the FIB; and
the router further comprises:
a first sending module (455), configured to: when the second determining module (430) determines that a forwarding entry matching at least one container identifier among the container identifiers of the access containers of all the resolvable containers exists in the FIB, send the content request packet according to a port in the matched forwarding entry.

11. The router according to any one of claims 8 to 10, wherein the third determining module is specifically configured to determine the resolvable container when the resolvable flag carried in the content request packet identified that the container is resolvable, and obtain the container information of the access container of the resolvable container, which is cached and still valid, from a network side, and/or obtain the container information of the access container of the resolvable container from a resolution system.

12. The router according to any one of claims 8 to 11, wherein the container information of the access container of the resolvable container comprises cacheability and an aging time, the cacheability indicates that a mapping relationship between the resolvable container and the access container of the resolvable container is capable of being cached on the network side or a user equipment side, the aging time indicates a valid time for which the mapping relationship is cached, and when a time, for which the mapping relationship is cached, exceeds the aging time, the cached mapping relationship becomes invalid; and
the router further comprises:
a caching module, configured to cache the mapping relationship between the resolvable container determined by the third determining module (440) and the access container of the resolvable container on the network side, so as to facilitate sharing with other routing nodes or user equipments.

13. The router according to any one of claims 8 to 12, further comprising:
a fourth determining module (480), configured to: before the first determining module (420) determines whether a forwarding entry matching the content name of the requested content exists in the FIB, determine whether content matching the content name of the requested content exists in a content store CS; and
a fourth sending module (485), configured to: when the fourth determining module (480) determines that content matching the content name of the requested content exists in the CS, send the matched content to a sender of the content request packet, wherein
the first determining module (420) is specifically configured to, when the fourth determining module (480) determines that no content matching the content name of the requested content exists in the CS, execute the step of determining whether a forwarding entry matching the content name of the requested content exists in the FIB.

14. The router according to claim 13, further comprising:
a fifth determining module (490), configured to: when the fourth determining module (480) determines that no content matching the content name of the requested content exists in the CS, determine whether a PIT entry matching the content name of the requested content exists in a pending information table PIT; and
an adding module (495), configured to: when the fifth determining module (490) determines that a PIT entry matching the content name of the requested content exists in the PIT, add an interface corresponding to the sender of the content request packet to the matched PIT entry; wherein
the first determining module (420) is specifically configured to: when the fifth determining module (490) determines that no PIT entry matching the content name of the requested content exists in the PIT, execute the step of determining whether a forwarding entry matching the content name of the requested content exists in the FIB.

## Patentansprüche

1. Paketweiterleitungsverfahren, das Folgendes umfasst:
Empfangen (210) eines Inhaltanforderungspakets, wobei das Inhaltanforderungspaket einen Inhaltsnamen für angeforderten Inhalt und Behälterinformationen führt, die Behälterinformationen eine Behälterkennung und eine auflösbare Markierung eines Behälters, der den angeforderten Inhalt speichert, umfassen und die auflösbare Markierung verwendet wird zum Identifizieren, ob der Behälter auflösbar ist;
Bestimmen (220), ob ein Weiterleitungseintrag, der mit dem Inhaltsnamen des angeforderten Inhalts übereinstimmt, in einer Weiterleitungsinformationsbasis bzw. FIB vorhanden ist;
wenn kein Weiterleitungseintrag, der mit dem Inhaltsnamen des angeforderten Inhalts übereinstimmt, in der FIB vorhanden ist, Bestimmen (230), ob ein Weiterleitungseintrag, der mit der in dem Inhaltanforderungspaket geführten Behälterkennung übereinstimmt, in der FIB vorhanden ist; und
wenn kein Weiterleitungseintrag, der mit der in dem Inhaltanforderungspaket geführten Behälterkennung übereinstimmt, in der FIB vorhanden ist, Bestimmen (240) von Behälterinformationen eines Zugangsbehälters eines auflösbaren Behälters, wenn die auflösbare Markierung, die in dem Inhaltanforderungspaket geführt wird, identifiziert hat, dass der Behälter auflösbar ist, um somit eine Weiterleitungsroute für das Inhaltanforderungspaket gemäß den Behälterinformationen des Zugangsbehälters des auflösbaren Behälters zu bestimmen;
wobei der Behälter ein zum Speichern einer Gruppe von Inhalten verwendeter Speicherraum ist.

2. Verfahren nach Anspruch 1, wobei der Inhaltsname des angeforderten Inhalts einem oder mehreren Heimbehältern entspricht und der Heimbehälter des angeforderten Inhalts ein Behälter ist, in dem der angeforderte Inhalt in der Lage ist, direkt geroutet zu werden.

3. Verfahren nach einem der Ansprüche 1-2, das ferner Folgendes umfasst:
wenn der Zugangsbehälter des auflösbaren Behälters auflösbar ist, Auflösen (250) des Zugangsbehälters des auflösbaren Behälters;
wenn ein durch die Auflösung erhaltener Zugangsbehälter auflösbar ist, weiteres Auflösen (252) des durch die Auflösung erhaltenen Zugangsbehälters bis ein durch die weitere Auflösung erhaltener Zugangsbehälter nicht auflösbar ist, um somit Behälterkennungen von Zugangsbehältern von allen auflösbaren Behältern des angeforderten Inhalts zu erhalten;
Abgleichen (254) der Behälterkennungen der Zugangsbehälter von allen auflösbaren Behältern mit einer voreingestellten Behälterkennung in der FIB, um somit zu bestimmen, ob ein Weiterleitungseintrag, der mit mindestens einer Behälterkennung unter den Behälterkennungen der Zugangsbehälter von allen auflösbaren Behältern übereinstimmt, in der FIB vorhanden ist; und
wenn ein Weiterleitungseintrag, der mit mindestens einer Behälterkennung unter den Behälterkennungen der Zugangsbehälter von allen auflösbaren Behältern übereinstimmt, in der FIB vorhanden ist, Senden (256) des Inhaltanforderungspakets an einen Port in dem übereinstimmenden Weiterleitungseintrag.

4. Verfahren nach einem der Ansprüche 1 bis 3, wobei der Schritt des Bestimmens von Behälterinformationen eines Zugangsbehälters eines auflösbaren Behälters, wenn die auflösbare Markierung, die in dem Inhaltanforderungspaket geführt wird, identifiziert hat, dass der Behälter auflösbar ist, Folgendes umfasst:
Bestimmen (241) des auflösbaren Behälters, wenn die auflösbare Markierung, die in dem Inhaltanforderungspaket geführt wird, identifiziert hat, dass der Behälter auflösbar ist;
Erhalten (242) der Behälterinformationen des Zugangsbehälters des auflösbaren Behälters, welche zwischengespeichert und noch gültig sind, von einer Netzwerkseite; und/oder
Erhalten (242) der Behälterinformationen des Zugangsbehälters des auflösbaren Behälters von einem Auflösungssystem.

5. Verfahren nach einem der Ansprüche 1 bis 4, wobei die Behälterinformationen des Zugangsbehälters des auflösbaren Behälters Zwischenspeicherungsfähigkeit und eine Alterungszeit umfassen, die Zwischenspeicherungsfähigkeit angibt, dass eine Abbildungsbeziehung zwischen dem auflösbaren Behälter und dem Zugangsbehälter des auflösbaren Behälters fähig ist, auf der Netzwerkseite oder einer Benutzergeräteseite zwischengespeichert zu werden, die Alterungszeit eine gültige Zeit angibt, für die die Abbildungsbeziehung zwischengespeichert wird, und wenn eine Zeit, für welche die Abbildungsbeziehung zwischengespeichert wird, die Alterungszeit übersteigt, die zwischengespeicherte Abbildungsbeziehung ungültig wird; und
das Verfahren ferner Folgendes umfasst:
Zwischenspeichern der Abbildungsbeziehung zwischen dem auflösbaren Behälter und dem Zugangsbehälter des auflösbaren Behälters auf der Netzwerkseite, um somit gemeinsames Nutzen mit anderen Routingknoten oder Benutzergeräten zu erleichtern.

6. Verfahren nach einem der Ansprüche 1 bis 5, das ferner Folgendes umfasst:
vor dem Schritt des Bestimmens, ob ein Weiterleitungseintrag, der mit dem Inhaltsnamen des angeforderten Inhalts übereinstimmt, in der FIB vorhanden ist, Bestimmen (272), ob Inhalt, der mit dem Inhaltsnamen des angeforderten Inhalts übereinstimmt, in einem Inhaltsspeicher CS vorhanden ist;
wenn Inhalt, der mit dem Inhaltsnamen des angeforderten Inhalts übereinstimmt, in dem CS vorhanden ist, Senden (274) des übereinstimmenden Inhalts an einen Absender des Inhaltanforderungspakets; und
wenn kein Inhalt, der mit dem Inhaltsnamen des angeforderten Inhalts übereinstimmt, in dem CS vorhanden ist, Ausführen (220a) des Schritts des Bestimmens, ob ein Weiterleitungseintrag, der mit dem Inhaltsnamen des angeforderten Inhalts übereinstimmt, in der FIB vorhanden ist.

7. Verfahren nach Anspruch 6, das ferner Folgendes umfasst:
wenn kein Inhalt, der mit dem Inhaltsnamen des angeforderten Inhalts übereinstimmt, in dem CS vorhanden ist, Bestimmen (276), ob ein PIT-Eintrag, der mit dem Inhaltsnamen des angeforderten Inhalts übereinstimmt, in einer Ausstehende-Informationen-Tabelle bzw. PIT vorhanden ist;
wenn ein PIT-Eintrag, der mit dem Inhaltsnamen des angeforderten Inhalts übereinstimmt, in der PIT vorhanden ist, Hinzufügen (278) einer Schnittstelle, die dem Absender des Inhaltanforderungspakets entspricht, zu dem übereinstimmenden PIT-Eintrag; und
wenn kein PIT-Eintrag, der mit dem Inhaltsnamen des angeforderten Inhalts übereinstimmt, in der PIT vorhanden ist, Ausführen (220b) des Schritts des Bestimmens, ob ein Weiterleitungseintrag, der mit dem Inhaltsnamen des angeforderten Inhalts übereinstimmt, in der FIB vorhanden ist.

8. Router (400), der **gekennzeichnet ist durch**:
ein Empfangsmodul (410), das ausgelegt ist zum Empfangen eines Inhaltanforderungspakets, wobei das Inhaltanforderungspaket einen Inhaltsnamen für angeforderten Inhalt und Behälterinformationen führt, die Behälterinformationen eine Behälterkennung und eine auflösbare Markierung eines Behälters, der den angeforderten Inhalt speichert, umfassen und die auflösbare Markierung verwendet wird zum Identifizieren, ob der Behälter auflösbar ist;
ein erstes Bestimmungsmodul (420), das ausgelegt ist zum Bestimmen, ob ein Weiterleitungseintrag, der mit dem Inhaltsnamen des angeforderten Inhalts, der in dem von dem Empfangsmodul (410) empfangenen Inhaltanforderungspaket geführt wird, übereinstimmt, in einer Weiterleitungsinformationsbasis bzw. FIB vorhanden ist;
ein zweites Bestimmungsmodul (430), das ausgelegt ist zum: wenn das erste Bestimmungsmodul (420) bestimmt, dass kein Weiterleitungseintrag, der mit dem Inhaltsnamen des angeforderten Inhalts übereinstimmt, in der FIB vorhanden ist, Bestimmen, ob ein Weiterleitungseintrag, der mit der in dem Inhaltanforderungspaket geführten Behälterkennung übereinstimmt, in der FIB vorhanden ist; und
ein drittes Bestimmungsmodul (440), das ausgelegt ist zum: wenn das zweite Bestimmungsmodul (430) bestimmt, dass kein Weiterleitungseintrag, der mit der in dem Inhaltanforderungspaket geführten Behälterkennung übereinstimmt, in der FIB vorhanden ist, Bestimmen von Behälterinformationen eines Zugangsbehälters eines auflösbaren Behälters, wenn die auflösbare Markierung, die in dem Inhaltanforderungspaket geführt wird, identifiziert hat, dass der Behälter auflösbar ist, um somit eine Weiterleitungsroute für das Inhaltanforderungspaket gemäß den Behälterinformationen des Zugangsbehälters des auflösbaren Behälters zu bestimmen;
wobei der Behälter ein zum Speichern einer Gruppe von Inhalten verwendeter Speicherraum ist.

9. Router nach Anspruch 8, wobei der Inhaltsname des angeforderten Inhalts einem oder mehreren Heimbehältern entspricht und der Heimbehälter des angeforderten Inhalts ein Behälter ist, in dem der angeforderte Inhalt in der Lage ist, direkt geroutet zu werden.

10. Router nach Anspruch 8, der ferner Folgendes umfasst:
ein erstes Auflösungsmodul (450), das ausgelegt ist zum: wenn der Zugangsbehälter des auflösbaren Behälters, der von dem dritten Bestimmungsmodul (440) bestimmt wurde, auflösbar ist, Auflösen des Zugangsbehälters des auflösbaren Behälters, und wenn ein durch die Auflösung erhaltener Zugangsbehälter auflösbar ist, weiteres Auflösen des durch die Auflösung erhaltenen Zugangsbehälters bis ein durch die weitere Auflösung erhaltener Zugangsbehälter nicht auflösbar ist, um somit Behälterkennungen von Zugangsbehältern von allen auflösbaren Behältern des angeforderten Inhalts zu erhalten; wobei
das zweite Bestimmungsmodul (430) ferner ausgelegt ist zum Abgleichen der Behälterkennungen der Zugangsbehälter von allen auflösbaren Behältern, die durch die Auflösung durch das erste Auflösungsmodul (450) erhalten wurden, mit einer voreingestellten Behälterkennung in der FIB, um somit zu bestimmen, ob ein Weiterleitungseintrag, der mit mindestens einer Behälterkennung unter den Behälterkennungen der Zugangsbehälter von allen auflösbaren Behältern übereinstimmt, in der FIB vorhanden ist; und
der Router ferner Folgendes umfasst:
ein erstes Sendemodul (455), das ausgelegt ist zum: wenn das zweite Bestimmungsmodul (430) bestimmt, dass ein Weiterleitungseintrag, der mit mindestens einer Behälterkennung unter den Behälterkennungen der Zugangsbehälter von allen auflösbaren Behältern übereinstimmt, in der FIB vorhanden ist, Senden des Inhaltanforderungspakets gemäß einem Port in dem übereinstimmenden Weiterleitungseintrag.

11. Router nach einem der Ansprüche 8 bis 10, wobei das dritte Bestimmungsmodul insbesondere ausgelegt ist zum Bestimmen des auflösbaren Behälters, wenn die auflösbare Markierung, die in dem Inhaltanforderungspaket geführt wird, identifiziert hat, dass der Behälter auflösbar ist, und Erhalten der Behälterinformationen des Zugangsbehälters des auflösbaren Behälters, welche zwischengespeichert und noch gültig sind, von einer Netzwerkseite und/oder Erhalten der Behälterinformationen des Zugangsbehälters des auflösbaren Behälters von einem Auflösungssystem.

12. Router nach einem der Ansprüche 8 bis 11, wobei die Behälterinformationen des Zugangsbehälters des auflösbaren Behälters Zwischenspeicherungsfähigkeit und eine Alterungszeit umfassen, die Zwischenspeicherungsfähigkeit angibt, dass eine Abbildungsbeziehung zwischen dem auflösbaren Behälter und dem Zugangsbehälter des auflösbaren Behälters fähig ist, auf der Netzwerkseite oder einer Benutzergeräteseite zwischengespeichert zu werden, die Alterungszeit eine gültige Zeit angibt, für die die Abbildungsbeziehung zwischengespeichert wird, und wenn eine Zeit, für welche die Abbildungsbeziehung zwischengespeichert wird, die Alterungszeit übersteigt, die zwischengespeicherte Abbildungsbeziehung ungültig wird; und
der Router ferner Folgendes umfasst:
ein Zwischenspeicherungsmodul, das ausgelegt ist zum Zwischenspeichern der Abbildungsbeziehung zwischen dem auflösbaren Behälter, der durch das dritte Bestimmungsmodul (440) bestimmt wurde, und dem Zugangsbehälter des auflösbaren Behälters auf der Netzwerkseite, um somit gemeinsames Nutzen mit anderen Routingknoten oder Benutzergeräten zu erleichtern.

13. Router nach einem der Ansprüche 8 bis 12, der ferner Folgendes umfasst:
ein viertes Bestimmungsmodul (480), das ausgelegt ist zum: bevor das erste Bestimmungsmodul (420) bestimmt, ob ein Weiterleitungseintrag, der mit dem Inhaltsnamen des angeforderten Inhalts übereinstimmt, in der FIB vorhanden ist, Bestimmen, ob Inhalt, der mit dem Inhaltsnamen des angeforderten Inhalts übereinstimmt, in einem Inhaltsspeicher CS vorhanden ist; und
ein viertes Sendemodul (485), das ausgelegt ist zum: wenn das vierte Bestimmungsmodul (480) bestimmt, dass Inhalt, der mit dem Inhaltsnamen des angeforderten Inhalts übereinstimmt, in dem CS vorhanden ist, Senden des übereinstimmenden Inhalts an einen Absender des Inhaltanforderungspakets; wobei das erste Bestimmungsmodul (420) insbesondere ausgelegt ist zum, wenn das vierte Bestimmungsmodul (480) bestimmt, dass kein Inhalt, der mit dem Inhaltsnamen des angeforderten Inhalts übereinstimmt, in dem CS vorhanden ist, Ausführen des Schritts des Bestimmens, ob ein Weiterleitungseintrag, der mit dem Inhaltsnamen des angeforderten Inhalts übereinstimmt, in der FIB vorhanden ist.

14. Router nach Anspruch 13, der ferner Folgendes umfasst:
ein fünftes Bestimmungsmodul (490), das ausgelegt ist zum: wenn das vierte Bestimmungsmodul (480) bestimmt, dass kein Inhalt, der mit dem Inhaltsnamen des angeforderten Inhalts übereinstimmt, in dem CS vorhanden ist, Bestimmen, ob ein PIT-Eintrag, der mit dem Inhaltsnamen des angeforderten Inhalts übereinstimmt, in einer Ausstehende-Informationen-Tabelle bzw. PIT vorhanden ist; und
ein Hinzufügemodul (495), das ausgelegt ist zum: wenn das fünfte Bestimmungsmodul (490) bestimmt, dass ein PIT-Eintrag, der mit dem Inhaltsnamen des angeforderten Inhalts übereinstimmt, in der PIT vorhanden ist, Hinzufügen einer Schnittstelle, die dem Absender des Inhaltanforderungspakets entspricht, zu dem übereinstimmenden PIT-Eintrag; wobei
das erste Bestimmungsmodul (420) insbesondere ausgelegt ist zum: wenn das fünfte Bestimmungsmodul (490) bestimmt, dass kein PIT-Eintrag, der mit dem Inhaltsnamen des angeforderten Inhalts übereinstimmt, in der PIT vorhanden ist, Ausführen des Schritts des Bestimmens, ob ein Weiterleitungseintrag, der mit dem Inhaltsnamen des angeforderten Inhalts übereinstimmt, in der FIB vorhanden ist.

## Revendications

1. Procédé de transfert de paquets, comprenant les étapes suivantes :
recevoir (210) un paquet de demande de contenu, dans lequel le paquet de demande de contenu achemine un nom de contenu du contenu demandé et des informations de conteneur, les informations de conteneur comprennent un identifiant de conteneur et un indicateur résoluble d'un conteneur stockant le contenu demandé, et l'indicateur résoluble est utilisé pour identifier si le conteneur est résoluble ;
déterminer (220) si une entrée de transfert correspondant au nom de contenu du contenu demandé existe dans une base d'informations de transfert FIB ;
lorsqu'aucune entrée de transfert correspondant au nom de contenu du contenu demandé n'existe dans le FIB, déterminer (230) si une entrée de transfert correspondant à l'identifiant de conteneur acheminé dans le paquet de demande de contenu existe dans le FIB ; et
lorsqu'aucune entrée de transfert concordant avec l'identifiant de conteneur acheminé dans le paquet de demande de contenu n'existe dans le FIB, déterminer (240) des informations de conteneur d'un conteneur d'accès d'un conteneur résoluble lorsque l'indicateur résoluble acheminé dans le paquet de demande de contenu a identifié que le conteneur est résoluble, de manière à déterminer un routage de transfert pour le paquet de demande de contenu conformément aux informations de conteneur du conteneur d'accès du conteneur résoluble ;
dans lequel le conteneur est un espace de stockage utilisé pour stocker un groupe de contenu.

2. Procédé selon la revendication 1, dans lequel le nom de contenu du contenu demandé correspond à un ou plusieurs conteneurs d'origine, et le conteneur d'origine du contenu demandé est un conteneur dans lequel le contenu demandé est capable d'être directement routé.

3. Procédé selon l'une quelconque des revendications 1-2, comprenant en outre les étapes suivantes :
lorsque le conteneur d'accès du conteneur résoluble est résoluble, résoudre (250) le conteneur d'accès du conteneur résoluble ;
lorsqu'un conteneur d'accès obtenu par la résolution est résoluble, résoudre (252) en outre le conteneur d'accès obtenu par la résolution jusqu'à ce qu'un conteneur d'accès obtenu par la résolution supplémentaire soit irrésoluble, de manière à obtenir des identifiants de conteneur de conteneurs d'accès de tous les conteneurs résolubles du contenu demandé ;
mettre en correspondance (254) les identifiants de conteneur des conteneurs d'accès de tous les conteneurs résolubles avec un identifiant de conteneur prédéfini dans le FIB, de manière à déterminer si une entrée de transfert correspondant à au moins un identifiant de conteneur parmi les identifiants de conteneur des conteneurs d'accès de tous les conteneurs résolubles existe dans le FIB ; et
lorsqu'une entrée de transfert correspondant à au moins un identifiant de conteneur parmi les identifiants de conteneur des conteneurs d'accès de tous les conteneurs résolubles existe dans le FIB, envoyer (256) le paquet de demande de contenu conformément à un port dans l'entrée de transfert mise en correspondance.

4. Procédé selon l'une quelconque des revendications 1 à 3, dans lequel l'étape consistant à déterminer des informations de conteneur d'un conteneur d'accès d'un conteneur résoluble lorsque l'indicateur résoluble acheminé dans le paquet de demande de contenu a identifié que le conteneur est résoluble comprend les étapes suivantes :
déterminer (241) le conteneur résoluble lorsque l'indicateur résoluble acheminé dans le paquet de demande de contenu a identifié que le conteneur est résoluble ;
obtenir (242) les informations de conteneur du conteneur d'accès du conteneur résoluble, qui est mis en cache et encore valide, à partir d'un côté réseau ; et/ou
obtenir (242) les informations de conteneur du conteneur d'accès du conteneur résoluble à partir d'un système de résolution.

5. Procédé selon l'une quelconque des revendications 1 à 4, dans lequel les informations de conteneur du conteneur d'accès du conteneur résoluble comprennent une capacité d'être mis en cache et un temps de vieillissement, la capacité d'être mis en cache indique qu'une relation de correspondance entre le conteneur résoluble et le conteneur d'accès du conteneur résoluble est capable d'être mise en cache côté réseau ou côté équipement d'utilisateur, le temps de vieillissement indique un temps valide pendant lequel la relation de correspondance est mise en cache, et lorsqu'un temps, pendant lequel la relation de correspondance est mise en cache, excède le temps de vieillissement, la relation de correspondance mise en cache devient non valide ; et
le procédé comprend en outre l'étape suivante :
mettre en cache la relation de correspondance entre le conteneur résoluble et le conteneur d'accès du conteneur résoluble côté réseau, de manière à faciliter le partage avec d'autres nœuds de routage ou équipements d'utilisateur.

6. Procédé selon l'une quelconque des revendications 1 à 5, comprenant en outre les étapes suivantes :
avant l'étape consistant à déterminer si une entrée de transfert correspondant au nom de contenu du contenu demandé existe dans le FIB, déterminer (272) si le contenu correspondant au nom de contenu du contenu demandé existe dans une mémoire de contenu CS ;
lorsqu'un contenu correspondant au nom de contenu du contenu demandé existe dans la CS, envoyer (274) le contenu mis en correspondance à un expéditeur du paquet de demande de contenu ; et
lorsqu'aucun contenu correspondant au nom de contenu du contenu demandé n'existe dans la CS, exécuter (220a) l'étape consistant à déterminer si une entrée de transfert correspondant au nom de contenu du contenu demandé existe dans le FIB.

7. Procédé selon la revendication 6, comprenant en outre les étapes suivantes :
lorsqu'aucun contenu correspondant au nom de contenu du contenu demandé n'existe dans la CS, déterminer (276) si une entrée PIT correspondant au nom de contenu du contenu demandé existe dans une table d'informations en attente PIT ;
lorsqu'une entrée PIT correspondant au nom de contenu du contenu demandé existe dans la PIT, ajouter (278) une interface correspondant à l'expéditeur du paquet de demande de contenu à l'entrée PIT correspondante ; et
lorsqu'aucune entrée PIT correspondant au nom de contenu du contenu demandé n'existe dans la PIT, exécuter (220b) l'étape consistant à déterminer si une entrée de transfert correspondant au nom de contenu du contenu demandé existe dans le FIB.

8. Routeur (400), **caractérisé par** :
un module de réception (410), configuré pour recevoir un paquet de demande de contenu, dans lequel le paquet de demande de contenu achemine un nom de contenu du contenu demandé et des informations de conteneur, les informations de conteneur comprennent un identifiant de conteneur et un indicateur résoluble d'un conteneur stockant le contenu demandé, et l'indicateur résoluble est utilisé pour identifier si le conteneur est résoluble ;
un premier module de détermination (420), configuré pour déterminer si une entrée de transfert correspondant au nom de contenu du contenu demandé acheminé par le paquet de demande de contenu reçu par le module de réception (410) existe dans une base d'informations de transfert FIB ;
un deuxième module de détermination (430), configuré pour : lorsque le premier module de détermination (420) détermine qu'aucune entrée de transfert correspondant au nom de contenu du contenu demandé n'existe dans le FIB, déterminer si une entrée de transfert correspondant à l'identifiant de conteneur acheminé dans le paquet de demande de contenu existe dans le FIB ; et
un troisième module de détermination (440), configuré pour : lorsque le deuxième module de détermination (430) détermine qu'aucune entrée de transfert correspondant à l'identifiant de conteneur acheminé dans le paquet de demande de contenu n'existe dans le FIB, déterminer des informations de conteneur d'un conteneur d'accès d'un conteneur résoluble lorsque l'indicateur résoluble acheminé dans le paquet de demande de contenu a identifié que le conteneur est résoluble, de manière à déterminer un routage de transfert pour le paquet de demande de contenu conformément aux informations de conteneur du conteneur d'accès du conteneur résoluble ;
dans lequel le conteneur est un espace de stockage utilisé pour stocker un groupe de contenu.

9. Routeur selon la revendication 8, dans lequel le nom de contenu du contenu demandé correspond à un ou plusieurs conteneurs d'origine, et le conteneur d'origine du contenu demandé est un conteneur dans lequel le contenu demandé est capable d'être directement routé.

10. Routeur selon la revendication 8, comprenant en outre :
un premier module de résolution (450), configuré pour :
lorsque le conteneur d'accès du conteneur résoluble déterminé par le troisième module de détermination (440) est résoluble, résoudre le conteneur d'accès du conteneur résoluble, et lorsqu'un conteneur d'accès obtenu par la résolution est résoluble, résoudre en outre le conteneur d'accès obtenu par la résolution jusqu'à ce qu'un conteneur d'accès obtenu par la résolution supplémentaire soit irrésoluble, de manière à obtenir des identifiants de conteneur de conteneurs d'accès de tous les conteneurs résolubles du contenu demandé ; dans lequel
le deuxième module de détermination (430) est en outre configuré pour mettre en correspondance les identifiants de conteneur des conteneurs d'accès de tous les conteneurs résolubles, qui sont obtenus par la résolution par le premier module de résolution (450), avec un identifiant de conteneur prédéfini dans le FIB, de manière à déterminer si une entrée de transfert correspondant à au moins un identifiant de conteneur parmi les identifiants de conteneur des conteneurs d'accès de tous les conteneurs résolubles existe dans le FIB ; et
le routeur comprend en outre :
un premier module d'envoi (455), configuré pour : lorsque le deuxième module de détermination (430) détermine qu'une entrée de transfert correspondant à au moins un identifiant de conteneur parmi les identifiants de conteneur des conteneurs d'accès de tous les conteneurs résolubles existe dans le FIB, envoyer le paquet de demande de contenu conformément à un port dans l'entrée de transfert mise en correspondance.

11. Routeur selon l'une quelconque des revendications 8 à 10, dans lequel le troisième module de détermination est spécifiquement configuré pour déterminer le conteneur résoluble lorsque l'indicateur résoluble acheminé dans le paquet de demande de contenu a identifié que le conteneur est résoluble, et obtenir les informations de conteneur du conteneur d'accès du conteneur résoluble, qui est mis en cache et encore valide, à partir d'un côté réseau, et/ou obtenir les informations de conteneur du conteneur d'accès du conteneur résoluble à partir d'un système de résolution.

12. Routeur selon l'une quelconque des revendications 8 à 11, dans lequel les informations de conteneur du conteneur d'accès du conteneur résoluble comprennent une capacité d'être mis en cache et un temps de vieillissement, la capacité d'être mis en cache indique qu'une relation de correspondance entre le conteneur résoluble et le conteneur d'accès du conteneur résoluble est capable d'être mise en cache côté réseau ou côté équipement d'utilisateur, le temps de vieillissement indique un temps valide pendant lequel la relation de correspondance est mise en cache, et lorsqu'un temps, pendant lequel la relation de correspondance est mise en cache, excède le temps de vieillissement, la relation de correspondance mise en cache devient non valide ; et
le routeur comprend en outre :
un module de mise en cache, configuré pour mettre en cache la relation de correspondance entre le conteneur résoluble déterminé par le troisième module de détermination (440) et le conteneur d'accès du conteneur résoluble côté réseau, de manière à faciliter le partage avec d'autres nœuds de routage ou équipements d'utilisateur.

13. Routeur selon l'une quelconque des revendications 8 à 12, comprenant en outre :
un quatrième module de détermination (480), configuré pour : avant que le premier module de détermination (420) détermine si une entrée de transfert correspondant au nom de contenu du contenu demandé existe dans le FIB, déterminer si le contenu correspondant au nom de contenu du contenu demandé existe dans une mémoire de contenu CS ; et
un quatrième module d'envoi (485), configuré pour : lorsque le quatrième module de détermination (480) détermine qu'un contenu correspondant au nom du contenu demandé existe dans la CS, envoyer le contenu mis en correspondance à un expéditeur du paquet de demande de contenu, dans lequel
le premier module de détermination (420) est spécifiquement configuré pour, lorsque le quatrième module de détermination (480) détermine qu'aucun contenu correspondant au nom de contenu du contenu demandé n'existe dans la CS, exécuter l'étape consistant à déterminer si une entrée de transfert correspondant au nom de contenu du contenu demandé existe dans le FIB.

14. Routeur selon la revendication 13, comprenant en outre :
un cinquième module de détermination (490), configuré pour : lorsque le quatrième module de détermination (480) détermine qu'aucun contenu correspondant au nom de contenu du contenu demandé n'existe dans la CS, déterminer si une entrée PIT correspondant au nom de contenu du contenu demandé existe dans une table d'informations en attente PIT ; et
un module d'ajout (495), configuré pour : lorsque le cinquième module de détermination (490) détermine qu'une entrée PIT correspondant au nom de contenu du contenu demandé existe dans la PIT, ajouter une interface correspondant à l'expéditeur du paquet de demande de contenu à l'entrée PIT correspondante ; dans lequel
le premier module de détermination (420) est spécifiquement configuré pour : lorsque le cinquième module de détermination (490) détermine qu'aucune entrée PIT correspondant au nom de contenu du contenu demandé n'existe dans la PIT, exécuter l'étape consistant à déterminer si une entrée de transfert correspondant au nom de contenu du contenu demandé existe dans le FIB.
